# EUROPEAN PATENT APPLICATION

(11) **EP 4 737 500 A1**
(43) Date of publication of application: **06.05.2026**
(21) Application number: 25212322.9
(22) Date of filing: 30.10.2025
(51) Int. Cl.: C08G 59/24, C08G 59/50

(54) **RAPID CURE EPOXY RESIN HARDENERS**

(30) Priority: 30.10.2024 GB 202416000
(71) Applicant: Jones, Paul, Wrightington WN6 9PS (GB)
(72) Inventor: Jones, Paul, Wrightington WN6 9PS (GB)
(74) Representative: Mathys & Squire

(57) **Abstract**

The invention relates to a class of epoxy resin curatives which act as rapid curing epoxy resin hardeners. In particular, the invention is directed to a class of epoxy resin curatives comprising a benzoic acid moiety and at least one Mannich base group, as well as a curative composition comprising the epoxy resin curative, processes for preparing the epoxy resin curative, and uses thereof. In one aspect, the epoxy resin curative has the formula (1) below:

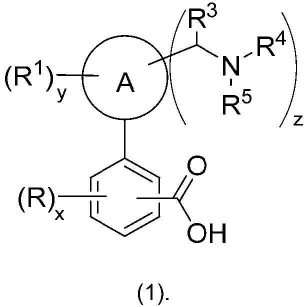

## Description

The invention relates to a class of epoxy resin curatives which act as rapid curing epoxy resin hardeners. In particular the invention is directed to a class of epoxy resin curatives comprising a benzoic acid moiety and at least one Mannich base group, as well as a curative composition comprising the epoxy resin curative, processes for preparing the epoxy resin curative, and uses thereof.

### BACKGROUND OF THE INVENTION

There is an array of crosslinking agents available for epoxy functional materials, but amines and products derived from amines offer the greatest versatility for curing epoxy resins. Collectively these materials offer the means of formulating systems that can provide the potential for curing in thin films and/or mass at a broad spectrum of temperatures. Polyamides and phenolic derived Mannich base curing agents have been used extensively but due to the inability of the polyamides to low temperature cure, and the regulatory and toxicity issues associated with free phenol, the scope of use and availability of these materials has substantially reduced.

Many commercial curing agent formulations are based on amines such as aliphatic, cyclo-aliphatic aryl-aliphatic and to a lesser extent aromatic amines or combinations thereof. These amines are generally modified in order to enhance the processing and/or performance aspects, to improve the active hydrogen equivalent weight and combining ratio with epoxy resins or to reduce the toxicity of the amine.

Mannich bases are examples of modified amines which offer enhanced properties, especially with regard to improved compatibility with epoxy resins, optimisation of cure speed and degree of cure, as well as resistance to carbamation. Commercially available Mannich bases include phenolic derived compounds that are the reaction product of an aldehyde (generally formaldehyde), a phenolic compound, or a substituted derivative thereof, and an amine. An example structure of a phenolic Mannich base is shown below:

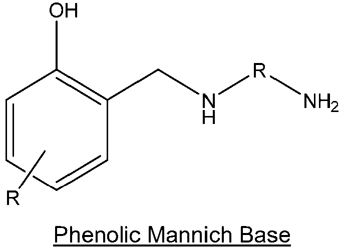

EP0779311 describes a Mannich base prepared by the Mannich reaction using (i) butyraldehyde, (ii) a phenolic compound, and (iii) a primary or a secondary polyamine. The use of butyraldehyde, rather than formaldehyde or paraformaldehyde, is reported to lower viscosity in the Mannich base products, which can be advantageous when used in epoxy curative applications.

However, the molecular weight, polydispersity and residual free phenol monomer levels have led to the reduction in availability and a decline in popularity of this class of materials. The conventional Mannich base with residual free phenol carries both acute toxicity labelling and a chronic health hazard warnings. The removal of several of the Hazard statements associated with free monomeric phenol and substituted phenols, is now mandated by some organisations, e.g. REACH (Registration, Evaluation, Authorisation and restriction of Chemicals). There remains a need for alternative Mannich bases that offer high process performance, broad compatibility with epoxy resins, and avoid the toxicity and environmental issues associated with known amine-derived epoxy resin curatives. Various specialist epoxy resin hardeners and accompanying cured epoxy resin systems have been designed to mitigate chemical toxicity, such as those described in WO2022112776 and WO2021152281, as well as to mitigate environmental damage such as those described in WO2023233151.

Conventional phenolic Mannich bases useful as epoxy resin curatives are limited in terms of their cure time and their peak exotherm. Epoxy resin hardeners which have longer cure times can be disadvantageous, for example in industrial processes. Long cure times will slow down production of any articles involving a cured epoxy resin. Additionally, long cure times increase the risk of contamination or defects during the curing process as the extended time increases the potential for exposure to environmental factors such as dust, moisture, or temperature fluctuations, which can compromise the quality of the final product. High peak exotherms in epoxy resin curatives can also be disadvantageous. Excessive heat generated during curing can cause thermal stress, leading to cracking or warping of the resin, which can compromise the quality of the final product. It can also increase the risk of premature curing, particularly in thicker sections, resulting in uneven or incomplete curing. Additionally, highly exothermic reactions can create safety hazards such as thermal runaway, especially on an industrial scale.

The present invention relates to a hitherto unknown class of epoxy resin curatives comprising a benzoic acid moiety and at least one Mannich base group. Without being bound to a particular theory, it is believed that the benzoic acid moiety comprised within the epoxy resin curative structure provides improved performance in terms of decreased cure time and decreased peak exotherm in the systems to which it is applied.

### SUMMARY OF THE INVENTION

In a first aspect, the present invention relates to an epoxy resin curative of formula (1): 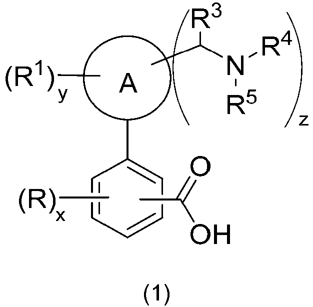 wherein:
ring A is a monocyclic or polycyclic ring comprising at least one aromatic or heteroaromatic group;
x is 0, 1, 2, 3, or 4;
y is 0, 1, 2, 3, 4, 5, or 6;
z is 1, 2, 3, or 4;
   each R is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₂ to C₂₀ alkenyl, -C₂ to C₂₀ alkynyl, -C₁ to C₂₀ alkyloxy, -C₁ to C₂₀ alkylamino, -OH, -OR², -NH₂, -NHR², -NR²₂, -C(O)OH, -C(O)OR², - C(O)NH₂, -C(O)NHR², -C(O)NR²₂, -O(CO)H, -O(CO)R², -NH(CO)H, -NH(CO)R², - NR²(CO)H, -NR²(CO)R², -SH, -SR², -SO₂H, -SO₂R², -SO₃R², -SO₃H, -SiR²₃, -NO₂, -CN, - F, -Cl, -Br, and -I;
   each R¹ is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₂ to C₂₀ alkenyl, -C₂ to C₂₀ alkynyl, -C₁ to C₂₀ alkyloxy, -C₁ to C₂₀ alkylamino, -OH, -OR², -NH₂, -NHR², -NR²₂, -C(O)OH, -C(O)OR², - C(O)NH₂, -C(O)NHR², -C(O)NR²₂, -O(CO)H, -O(CO)R², -NH(CO)H, -NH(CO)R², - NR²(CO)H, -NR²(CO)R², -SH, -SR², -SO₂H, -SO₂R², -SO₃R², -SO₃H, -SiR²₃, -NO₂, -CN, - F, -Cl, -Br, -I, =O, =NH, =NR², =NH₂⁽⁺⁾, =NHR²⁽⁺⁾, and =NR²₂⁽⁺⁾;
   each R² is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, an optionally substituted 6 to 10 membered aromatic group, an optionally substituted 5 to 10 membered heteroaromatic group, -C₂ to C₂₀ alkenyl, -C₂ to C₂₀ alkynyl, -C₁ to C₂₀ alkoxy, and -C₁ to C₂₀ alkylamino;
   each R³ group is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, a 6 to 10 membered aromatic group, and a 5 to 10 membered heteroaromatic group; wherein each R³ is optionally substituted with one or more groups selected from -C₁ to C₁₀ alkyl, -C₁ to C₁₀ haloalkyl, -C₁ to C₁₀ alkoxy, -OH, and =O;
   each R⁴ is independently selected from hydrogen or a C₁ to C₁₀₀ hydrocarbyl group;
   each R⁵ is independently selected from hydrogen or a C₁ to C₁₀₀ hydrocarbyl group; wherein each R⁴ and R⁵ may be taken together with the nitrogen atom to which they are attached to form a cyclic C₃ to C₁₀₀ hydrocarbyl group;
or a salt thereof.

In a second aspect, the present invention relates to a process of preparing an epoxy resin curative of formula (1) as defined herein, the method comprising performing a Mannich reaction using:
i) a precursor of formula (2); 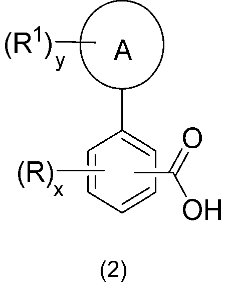
ii) one or more aldehyde having the structure HR³C=O; and
iii) one or more amine having the structure HNR⁴R⁵;
wherein R, R¹, R², R³, R⁴, R⁵, A, x and y are as defined herein.

In a third aspect, the present invention relates to an epoxy resin curative composition comprising an epoxy resin curative as defined herein.

In a fourth aspect, the present invention relates to a method for preparing a cured epoxy resin, said method comprising:
a) contacting an epoxy resin with an epoxy resin curative as defined herein or a composition as defined herein; and
b) forming a cured epoxy resin.

In a fifth aspect, the present invention relates to a cured epoxy resin prepared, or preparable, by the methods described herein.

In a sixth aspect, the present invention relates to the use of an epoxy resin curative as defined herein or of a composition as defined herein, for causing crosslinking in an epoxy resin.

### BRIEF DESCRIPTION OF THE FIGURES

Figure 1 depicts a reactivity curve for an epoxy resin curative of the present invention, the gel-time (set-point) (minutes) and the peak exotherm (°C) are shown;
Figure 2 depicts a reactivity curve for a comparative known epoxy resin curative, the gel-time (set-point) (minutes) and the peak exotherm (°C) are shown;
Figure 3 shows an image of a thin film cure experiment with points A to E labelled; and
Figure 4 depicts the hardness development vs time of an epoxy resin curative of the present invention at 5 °C and at 25 °C.

### DETAILED DESCRIPTION

### Definition of Terms

For the purposes of the present invention, the following terms as used herein shall, unless otherwise indicated, be understood to have the following meanings. Other terms that are not specifically defined below are to be understood as their normal meaning in the art.

The term "hydrocarbyl" as used herein, refers to a monovalent, divalent, or multivalent group, comprising hydrogen and carbon atoms, such as a major proportion (i.e., more than 50 %) of hydrogen and carbon atoms, preferably consisting exclusively of hydrogen and carbon atoms. The hydrocarbyl group may be aromatic, saturated aliphatic or unsaturated aliphatic. The hydrocarbyl group may be entirely aliphatic or a combination of aliphatic and aromatic portions. In some examples, the hydrocarbyl group includes a branched aliphatic chain which is substituted by one or more aromatic groups. Examples of hydrocarbyl groups therefore include acyclic groups, as well as groups that combine one or more acyclic portions and one or more cyclic portions, which may be selected from carbocyclic, aryl and heterocyclyl groups. The hydrocarbyl group includes monovalent groups and polyvalent groups as specified and may, for example, include one or more groups selected from alkyl, alkenyl, alkynyl, carbocyclyl (e.g. cycloalkyl or cycloalkenyl), aryl and heterocyclyl. The hydrocarbyl group may contain one or more heteroatoms, such as oxygen, nitrogen, sulphur, silicon or halogen which may be part of a functional group such as an alcohol, ether, carbonyl, ester, carboxylic acid, carbonate, amide, amine, carbamate, urea, thiol, thioether, thioester, thioacid, thioamide, silane organic halide or heterocycle, the hydrocarbyl group may contain any combination of the above insofar as it is chemically stable. Furthermore, in some embodiments, halogens may entirely replace the hydrogen component of the hydrocarbyl group (i.e. the carbon-bonded hydrogens) to give the corresponding halo-substituted analogue.

The term "alkyl" as used herein refers to a straight- or branched-chain alkyl moiety. Unless specifically indicated otherwise, the term "alkyl" does not include optional substituents. The term "haloalkyl" as used herein refers to an alkyl group substituted with one or more halogen atoms. The term "halogen" as used herein refers to any of fluorine, chlorine, bromine, or iodine.

The term "alkyloxy" as used herein refers to an alkyl group substituted with one or more hydroxy groups or ether groups. The term "alkylamino" as used herein refers to an alkyl group substituted with one or more primary, secondary, or tertiary amine groups.

The term "cycloalkyl" as used herein refers to a saturated aliphatic hydrocarbyl moiety containing at least one ring, wherein said ring has at least 3 ring carbon atoms. The cycloalkyl groups mentioned herein may optionally have alkyl groups attached thereto. Examples of cycloalkyl groups include groups that are monocyclic, polycyclic (e.g., bicyclic) or bridged ring system. Examples of cycloalkyl groups include cyclopropyl, cyclobutyl, cyclopentyl, cyclohexyl and the like. The term "heterocycloalkyl" as used herein refers to a cycloalkyl group wherein the ring contains at least one heteroatom selected from oxygen, nitrogen, and sulphur. Examples of heterocycloalkyl groups include morpholine, piperidine, piperazine and the like.

The term "alkenyl" as used herein refers to a straight- or branched-chain alkyl group containing at least one carbon-carbon double bond, of either E or Z configuration unless specified. The term "alkynyl" as used herein refers to a straight- or branched-chain alkyl group containing at least one carbon-carbon triple bond. Examples of alkenyl groups include ethenyl, 2-propenyl, 1-butenyl, 2-butenyl, 3-butenyl, 1-pentenyl, 2-pentenyl, 3-pentenyl, 1-hexenyl, 2-hexenyl, 3-hexenyl and the like.

The term "aryl" as used herein refers to an aromatic carbocyclic ring system. An example of an aryl group includes a group that is a monocyclic aromatic ring system or a polycyclic ring system containing two or more rings, at least one of which is aromatic. Examples of aryl groups include aryl groups that comprise from 1 to 6 exocyclic carbon atoms in addition to ring carbon atoms. Examples of aryl groups include aryl groups that are monovalent or polyvalent as appropriate. Examples of monovalent aryl groups include phenyl, benzyl, naphthyl, fluorenyl, azulenyl, indenyl, anthryl and the like. An example of a divalent aryl group is 1,4-phenylene.

The term "heteroaryl" as used herein refers to an aromatic heterocyclic ring system wherein said ring atoms include at least one ring carbon atom and at least one ring heteroatom selected from nitrogen, oxygen, and sulphur. Examples of heteroaryl groups include heteroaryl groups that are a monocyclic ring system or a polycyclic (e.g. bicyclic) ring system, containing two or more rings, at least one of which is aromatic. Examples of heteroaryl groups include those that, in addition to ring carbon atoms, comprise from 1 to 6 exocyclic carbon atoms. Examples of heteroaryl groups include those that are monovalent or polyvalent as appropriate. Examples of heteroaryl groups include pyridyl, pyrimidyl, thiopheneyl, isoxazolyl and benzo[b]furanyl groups.

The term "polyamine" as used herein refers to an organic compound having a plurality of amine groups. Preferably the polyamine is an organic compound having a plurality of amine groups having active hydrogens, i.e. one or more primary amines and/or secondary amines, also described herein as "active amine(s)". For the avoidance of doubt, in the context of the present invention a 'diamine' having two amino groups is considered to fall within the scope of a "polyamine", and a 'monoamine' is having one amino group is not considered to fall within the scope of a "polyamine".

The term "monoamine" as used herein refers to an organic compound having one amine group. Preferably the monoamine is an organic compound having one amine group having at least one active hydrogen, i.e. a primary amine or secondary amine, also described herein as a "active amine".

The term "active amine" refers to a primary or secondary amine, having at least one amine N-H bond. An active amine may have one or two substituents, which may contain additional amine groups in its substituents, which may be active amines or tertiary amines.

The term "epoxy resin" as used herein refers to an organic compound having one or more epoxide groups. **In** the context of the present invention the term "epoxy resin" may be used to refer to a monomeric, or polymeric organic compound, having one or more epoxide groups. An "epoxy resin" may also be referred to in some publications as an "epoxy".

The term "cured epoxy resin" as used herein refers to an organic compound produced by reaction of an "epoxy resin" with a "curing agent", for example by the processes described herein.

The terms "epoxy resin curative", "hardener", "curing agent" or "curative" as used herein refers to any species that is capable of causing crosslinking between molecules of epoxy resin, which may also be referred to as hardening or curing the epoxy resin. Causing crosslinking between molecules of epoxy resin, may for example, occur by nucleophilic reaction of the curing agent with epoxide groups present on the epoxy resin such that the curing agent is incorporated into a cured epoxy resin, or for example, a catalytic process whereby the curing agent catalyses polymerisation of the epoxy resin to a cured epoxy resin.

In the context of the present invention, the term "Mannich base" refers to an amine compound prepared or preparable by the Mannich reaction between a nucleophile, an aldehyde (including formaldehyde), and an active amine. A "Mannich base" will comprise at least one "Mannich base group" which is defined herein as an amine group bonded to an SP³ hybridised carbon atom, wherein said SP³ hybridised carbon atom is bonded to the nucleophile used in the Mannich reaction, for example an aromatic ring. Said amine group may be primary, secondary, or tertiary, depending on the active amine used in the Mannich reaction. Said SP³ hybridised carbon atom may be substituted or unsubstituted. In the present invention, the nucleophile is typically an aromatic ring.

A "tautomer" is a structural isomer of a compound that may readily interconvert with said compound. For example, as would be appreciated, fluorescein exists in three tautomeric forms, a quinoid form, a zwitterionic form, and a spirolactone form, shown below.

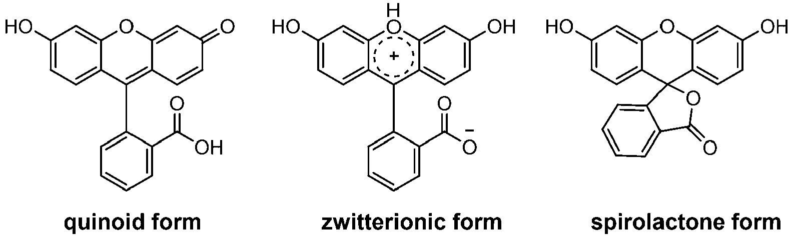

As would be appreciated, the spirolactone form masks the benzoic acid moiety by formation of a cyclic lactone group. It will be appreciated that the formulae used herein typically show only one tautomer of the compound, whereas certain compounds may exist in more than one such form. This will be readily apparent to the skilled reader. In some cases, tautomerisation between carboxylic acid and lactone forms may be pH dependent. In the context of the present invention the term "tautomeric precursor" refers a lactone isomer of a carboxylic acid containing epoxy resin curative compound of the present invention, which may interconvert with said carboxylic acid containing epoxy resin curative compound; and/or a deprotonated form of a carboxylic acid containing epoxy resin curative compound as described herein, i.e. a carboxylate salt, which may be readily converted to said carboxylic acid containing epoxy resin curative compound protonation. The present invention includes tautomeric precursors of and deprotonated forms of the carboxylic acid containing epoxy resin curative compounds of the invention, including as single tautomeric precursors, or as any mixture of tautomeric precursors and in any ratio. In particular, the existence of a lactone tautomeric form of a carboxylic acid containing epoxy resin curative compound does not exclude that compound from the scope of the present invention. The present invention provides a carboxylic acid containing epoxy resin curative compound including any lactone tautomers thereof, or deprotonated salt forms thereof. As would be appreciated, any lactone tautomer, or deprotonated salt form of a carboxylic acid containing epoxy resin curative compound still find utility in being able to readily interconvert to said carboxylic acid containing epoxy resin curative compound. The epoxy resin curative of formula (1) may exist in various salt forms. Similarly, other protic groups such as a hydroxy group may be deprotonated and carry a negative charge, in which case a positive counterion will be present, such as sodium or potassium. Amine groups may be protonated and thus have a positive charge and a negative counterion, such as chloride. Zwitterionic forms may also be possible. Typically, such functional groups, in particular amine groups will be converted to a neutral form before use. Neutral and salt forms may be easily interconverted using appropriate pH conditions, this is within the capabilities of the skilled person.

### Detailed Description of the Invention

The present invention relates to a hitherto unknown class of epoxy resin curatives which confer rapid cure times whilst also providing low peak exotherms. Rapid cure times are advantageous as they allow for increased industrial productivity. Shorter cure times decrease the risk of contamination or defects during the curing process, as the shortened time decreases exposure to environmental factors such as dust, moisture, or temperature fluctuations. Additionally, lower peak exotherms advantageously prevent any thermal stress or safety hazards, such as thermal runaway, during curing.

In a first aspect, the present invention relates to an epoxy resin curative of formula (1): 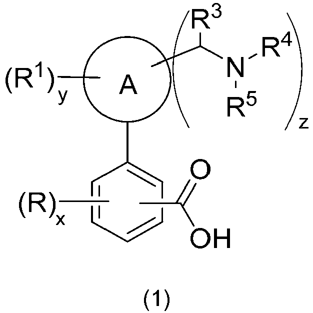 wherein:
ring A is a monocyclic or polycyclic ring comprising at least one aromatic or heteroaromatic group;
x is 0, 1, 2, 3, or 4;
y is 0, 1, 2, 3, 4, 5, or 6;
z is 1, 2, 3, or 4;
   each R is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₂ to C₂₀ alkenyl, -C₂ to C₂₀ alkynyl, -C₁ to C₂₀ alkyloxy, -C₁ to C₂₀ alkylamino, -OH, -OR², -NH₂, -NHR², -NR²₂, -C(O)OH, -C(O)OR², - C(O)NH₂, -C(O)NHR², -C(O)NR²₂, -O(CO)H, -O(CO)R², -NH(CO)H, -NH(CO)R², - NR²(CO)H, -NR²(CO)R², -SH, -SR², -SO₂H, -SO₂R², -SO₃R², -SO₃H, -SiR²₃, -NO₂, -CN, - F, -Cl, -Br, and -I;
   each R¹ is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₂ to C₂₀ alkenyl, -C₂ to C₂₀ alkynyl, -C₁ to C₂₀ alkyloxy, -C₁ to C₂₀ alkylamino, -OH, -OR², -NH₂, -NHR², -NR²₂, -C(O)OH, -C(O)OR², - C(O)NH₂, -C(O)NHR², -C(O)NR²₂, -O(CO)H, -O(CO)R², -NH(CO)H, -NH(CO)R², - NR²(CO)H, -NR²(CO)R², -SH, -SR², -SO₂H, -SO₂R², -SO₃R², -SO₃H, -SiR²₃, -NO₂, -CN, - F, -Cl, -Br, -I, =O, =NH, =NR², =NH₂⁽⁺⁾, =NHR²⁽⁺⁾, and =NR²₂⁽⁺⁾;
   each R² is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, an optionally substituted 6 to 10 membered aromatic group, an optionally substituted 5 to 10 membered heteroaromatic group, -C₂ to C₂₀ alkenyl, -C₂ to C₂₀ alkynyl, -C₁ to C₂₀ alkoxy, and -C₁ to C₂₀ alkylamino;
   each R³ group is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, a 6 to 10 membered aromatic group, and a 5 to 10 membered heteroaromatic group; wherein each R³ is optionally substituted with one or more groups selected from -C₁ to C₁₀ alkyl, -C₁ to C₁₀ haloalkyl, -C₁ to C₁₀ alkoxy, -OH, and =O;
   each R⁴ is independently selected from hydrogen or a C₁ to C₁₀₀ hydrocarbyl group;
   each R⁵ is independently selected from hydrogen or a C₁ to C₁₀₀ hydrocarbyl group; wherein each R⁴ and R⁵ may be taken together with the nitrogen atom to which they are attached to form a cyclic C₃ to C₁₀₀ hydrocarbyl group;
or a salt thereof.

The epoxy resin curative of formula (1) comprises a benzoic acid moiety bonded to ring A. The carboxylic acid group may be at any ring position relative to ring A, however, the ortho and para positions are preferred. When the carboxylic acid is at the ortho or the para position relative to ring A, the epoxy resin curative has the formula (1a) or (1c), respectively:

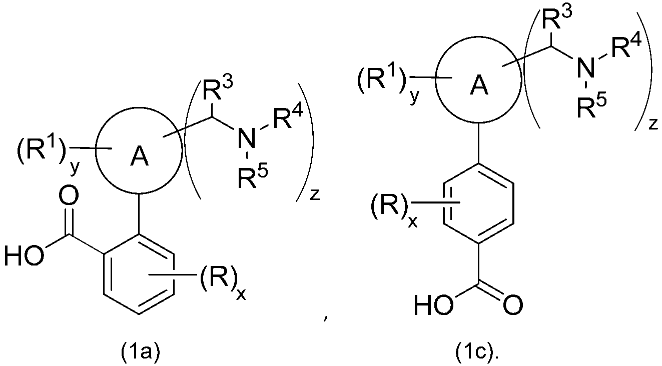

At least one carboxylic acid is present on the benzoic acid moiety, although multiple carboxylic acids may be present. This is because the benzoic acid moiety is optionally substituted with 0, 1, 2, 3, or 4 R groups, and R may be -COOH. For example, two, or three carboxylic acid groups may be present on the benzoic acid moiety. In the case that two carboxylic acid groups are present on the benzoic acid moiety it is preferred that they are present at a 1,3- or meta position relative to each other, it is also preferred that the two carboxylic acid groups and ring A have a 1,2,4- substitution pattern relative to each other where ring A is considered to occupy the 1-position, in other words there is a carboxylic acid group present ortho and para to the position of ring A.

The nature of ring A is not particularly limited, ring A may be any monocyclic or polycyclic ring comprising at least one aromatic or heteroaromatic group. As will be appreciated, when ring A is polycyclic, a least one ring is aromatic or heteroaromatic. The aromatic or heteroaromatic group is necessary to act as the nucleophile in the Mannich reaction by which the epoxy resin curative is synthesised. Some preferred structures of ring A include a phenyl ring, or a xanthene-based structure. For example, ring A may be a structure selected from: 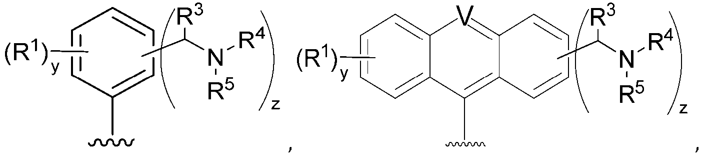 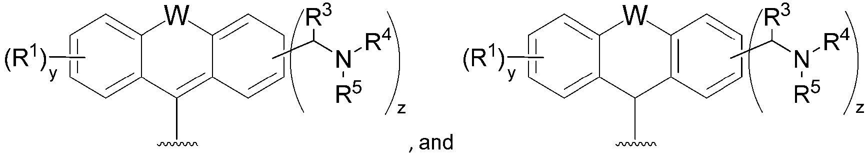 wherein 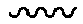 represents the point of attachment to the remainder of the molecule; wherein V is selected from: -N=, -CR⁶=, and -SiR⁶=; wherein W is selected from: -O-, - NR⁶-, -S-, -S(O)-, -S(O₂)-, -CR⁶₂-, and -SiR⁶₂-; and wherein each R⁶ is independently selected from hydrogen, or -C₁ to C₆ alkyl; preferably wherein W is -O-.

In the above exemplary ring A structures, an R¹ group and a -(CHR³-NR⁴R⁵) Mannich base group are depicted for clarity and for consistency with formula (1). For the avoidance of doubt, these structures are intended to represent optional substitution of one or more R¹ group, and substitution of one or more -(CHR³-NR⁴R⁵) Mannich base group at any available positions on ring A, this substitution is not necessarily limited to only the specific ring of the multicyclic ring system on which they are depicted in the structures above.

Many xanthene based compounds, such as carboxylic acid containing xanthene dyes, for example, fluorescein, rhodamines, or substituted analogues thereof, are suitable starting materials for preparation of an epoxy resin curative of formula (1). Some examples of suitable carboxylic acid containing xanthene dye starting materials are shown below:

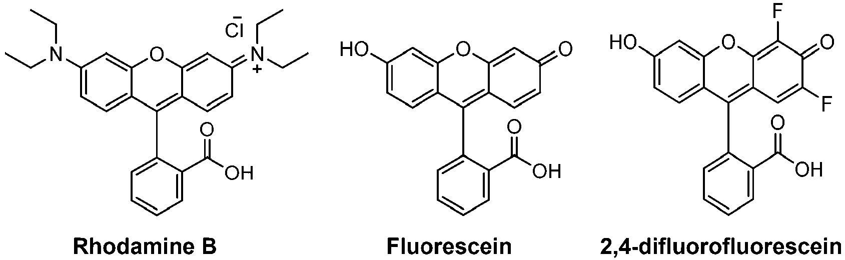

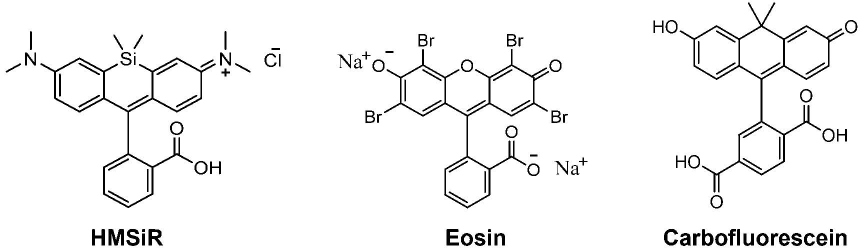

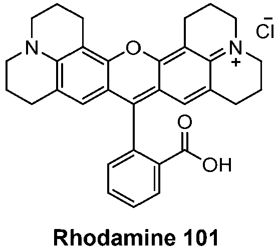

Whilst the term "xanthene" typically refers to an -9-Oxaanthracene ring, i.e. an oxygen containing ring, the term "xanthene dye" is understood to encompass xanthene analogues where other heteroatoms or carbon take the place of oxygen, as can be seen above. As will be apparent from the above structures, xanthene dyes usually comprise an SP³ hydroxy or amino substituent and an SP² oxo, imine, or iminium substituent at the 3 and 6 positions of the xanthene ring or xanthene ring analogue. These substitutes, when present, fall within the scope of R¹ in formula (1). These substituents in these positions are particularly preferable as they act as activating groups to the xanthene ring or xanthene ring analogue which activate the Mannich reaction which is used to introduce the one or more -(CHR³-NR⁴R⁵) Mannich base groups. It is preferred that ring A has a structure selected from: 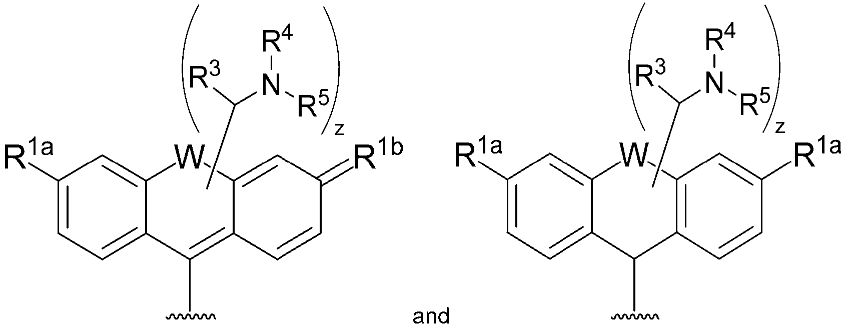 wherein each R^{1a} is independently selected from: -OH, -OR², -NH₂, -NHR², and -NR²₂; and wherein R^{1b} is selected from =O, =NH, =NR², =NH₂⁽⁺⁾, =NHR²⁽⁺⁾, and =NR²₂⁽⁺⁾. As would be appreciated, positively charged substituents will necessitate a negatively charged counterion. Any suitable counterion may be present.

Again, in the above exemplary ring A structures, a -(CHR³-NR⁴R⁵) Mannich base group is depicted for clarity and for consistency with formula (1). For the avoidance of doubt, these structures are intended to represent substitution of one or more -(CHR³-NR⁴R⁵) Mannich base group at any available positions on ring A, this substitution is not necessarily limited to only the specific ring of the multicyclic ring system on which they are depicted in the structures above.

R^{1a} and R^{1b} are each intended to each represent a subset the possible substituents of R¹ however, this does not preclude the possible presence of further R¹ groups on ring A in the above structures. Ring A may be substituted with 0, 1, 2, 3, 4, 5, or 6 R¹ groups, in the case that ring A is substituted with R^{1a} and R^{1b} as depicted above, 0, 1, 2, 3, or 4 further R¹ groups may be present. It is preferable that each -(CHR³-NR⁴R⁵) Mannich base group is present at a position ortho to an R^{1a} or R^{1b}.

The benzoic acid moiety may be substituted with x R groups, wherein x is 0, 1, 2, 3, or 4. For the avoidance of doubt, although each R group may be -COOH, the carboxylic acid group which is explicitly depicted in formula (1) is not considered to be an R group and is not included in the count of R groups. However, any further carboxylic acid groups, such as a second or third carboxylic acid group, are considered to be R groups.

Preferably, each R is independently selected from: -C₁ to C₂₀ alkyl, -C₁ to C₂₀ haloalkyl, - C₂ to C₂₀ alkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₁ to C₂₀ alkyloxy, -C₁ to C₂₀ alkylamino, -OH, -OR², -NH₂, -NHR², -NR²₂, -C(O)OH, -C(O)OR², -C(O)NH₂, -C(O)NHR², -C(O)NR²₂, -SO₂H, - SO₂R², -SO₃R², -SO₃H, -NO₂, -CN, -F, -Cl, -Br, and -I; and each R² is independently selected from: -C₁ to C₂₀ alkyl, -C₁ to C₂₀ haloalkyl, -C₂ to C₂₀ alkenyl, -C₁ to C₂₀ alkoxy, and -C₁ to C₂₀ alkylamino. More preferably wherein each R is independently selected from: -C₁ to C₂₀ alkyl, -C₂ to C₂₀ alkenyl, -OH, -OR², -NH₂, -NHR², -NR²₂, -C(O)OH, - C(O)OR², -C(O)NH₂, -C(O)NHR², -C(O)NR²₂, -F, -Cl, -Br, and -I; and each R² is independently selected from: -C₁ to C₂₀ alkyl.

Ring A may be substituted with y R¹ groups, wherein y is 0, 1, 2, 3, 4, 5, or 6. Preferably, each R¹ is independently selected from: -C₁ to C₂₀ alkyl, -C₁ to C₂₀ haloalkyl, -C₂ to C₂₀ alkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₁ to C₂₀ alkyloxy, -C₁ to C₂₀ alkylamino, -OH, -OR², -NH₂, -NHR², -NR²₂, -C(O)OH, -C(O)OR², -C(O)NH₂, -C(O)NHR², -C(O)NR²₂, -SO₂H, - SO₂R², -SO₃R², -SO₃H, -NO₂, -CN, -F, -Cl, -Br, -I, =O, =NH, =NR², =NH₂⁽⁺⁾, =NHR²⁽⁺⁾, and =NR²₂⁽⁺⁾; and each R² is independently selected from: -C₁ to C₂₀ alkyl, -C₁ to C₂₀ haloalkyl, -C₂ to C₂₀ alkenyl, -C₁ to C₂₀ alkoxy, and -C₁ to C₂₀ alkylamino. More preferably wherein each R¹ is independently selected from: -C₁ to C₂₀ alkyl, -C₂ to C₂₀ alkenyl, -OH, -OR², -NH₂, -NHR², -NR²₂, -C(O)OH, -C(O)OR², -C(O)NH₂, -C(O)NHR², - C(O)NR²₂, -F, -Cl, -Br, -I, =O, =NH, =NR², =NH₂⁽⁺⁾, =NHR²⁽⁺⁾, and =NR²₂⁽⁺⁾; and each R² is independently selected from: -C₁ to C₂₀ alkyl.

Additionally, any substituents on Ring A which have activating effect on ring A are preferred. Activating groups are substituents that increase the nucleophilicity of unsubstituted positions on the ring system. Unless specified otherwise, the term activating group herein refers to any substituent that increases the reactivity of ring A towards electrophilic aromatic substitution. Examples of substituents that act as activating groups and electrophilic aromatic directing groups are listed below in Table 1, wherein R² is as defined in any embodiment described hereinabove.

**Table 1: exemplary activating and electrophilic aromatic directing groups**

| **Group** | **Structure** | **Activating and Directing Strength** |
|---|---|---|
| Tertiary amine | -NR²₂ | Strong |
| Secondary amine | -NHR²₂ | Strong |
| Primary amine | -NH₂ | Strong |
| Alkoxy | -OR² | Strong |
| Hydroxyl | -OH | Strong |
| Acyloxy | -O(CO)R² | Moderate |
| Acylamido | -NR(CO)R² | Moderate |
| Thiol | -SH | Moderate |
| Alkylthio | -SR² | Moderate |
| Aryl | -Ar | Weak |
| Alkynyl | -C≡CH | Weak |
| Vinyl | -CH=CH₂ | Weak |
| Alkyl | -CH₃ | Weak |
| Silyl | -SiR²₃ | Weak |

As would be appreciated, some functional groups may interconvert depending on resonance form, such as hydroxyl groups and carbonyl groups, or amine groups and imine groups. Where a substituent is described as, for example, a hydroxyl group, amine group, carbonyl group, imine group, or any other functional group, it is sufficient that at least one resonance form of said compound comprises said group.

An optionally substituted -(CHR³)-(6 to 10 membered aromatic group) or an optionally substituted -(CHR³)-(5 to 10 membered heteroaromatic group) may be introduced by a condensation reaction between ring A, an aldehyde of the formula HR³C=O, and the corresponding optionally substituted 6 to 10 membered aromatic compound or the optionally substituted 5 to 10 membered heteroaromatic compound. The optionally substituted 6 to 10 membered aromatic compound or the optionally substituted 5 to 10 membered heteroaromatic compound may be added prior to, during, or after the Mannich reaction and the same aldehyde may be used as is used in the Mannich reaction to perform both reactions simultaneously or in one pot. Therefore, R³ in this context may be as defined hereinbelow in the context of the -(CHR³-NR⁴R⁵) Mannich base group.

Substitution of the -(CHR³)-(6 to 10 membered aromatic group) or -(CHR³)-(5 to 10 membered heteroaromatic group) with one or more activating group, such as an activating group listed in Table 1, is also preferred in order to activate the one or more additional aromatic groups towards nucleophilic aromatic substitution. A particularly preferable substituted 6 to 10 membered aromatic compound for this use is phenol, in this case the optional substitution is a hydroxy group. Where the -(CHR³)-(6 to 10 membered aromatic group) or -(CHR³)-(5 to 10 membered heteroaromatic group) is substituted with one or more activating group, such as hydroxy in the case of a phenol group, the one or more activating group will typically be present at the 2-, 4-, and/or 6-, (ortho or para) position relative to the -(CHR³)- linker.

If an optionally substituted -(CHR³)-(6 to 10 membered aromatic group) or an optionally substituted -(CHR³)-(5 to 10 membered heteroaromatic group) is introduced to ring A prior to or during the Mannich reaction, then the optionally substituted -(CHR³)-(6 to 10 membered aromatic group) or the optionally substituted -(CHR³)-(5 to 10 membered heteroaromatic group) may also act as a nucleophile in the Mannich reaction, particularly if activating substitution is present. Therefore, the optional substitution may further include one or more a -(CHR³-NR⁴R⁵) Mannich base group. Where an activating group is present on an optionally substituted -(CHR³)-(6 to 10 membered aromatic group) or an optionally substituted -(CHR³)-(5 to 10 membered heteroaromatic group), any - (CHR³-NR⁴R⁵) Mannich base group present on an optionally substituted -(CHR³)-(6 to 10 membered aromatic group) or an optionally substituted -(CHR³)-(5 to 10 membered heteroaromatic group) is typically present at the 2-, 4-, and/or 6-, (ortho or para) position relative to the activating group.

Preferably, the optional substitution on an optionally substituted -(CHR³)-(6 to 10 membered aromatic group), optionally substituted -(CHR³)-(5 to 10 membered heteroaromatic group), optionally substituted -(6 to 10 membered aromatic group), or optionally substituted -(5 to 10 membered heteroaromatic group) is selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, -C₂ to C₂₀ alkenyl, -C₂ to C₂₀ alkynyl, -C₁ to C₂₀ alkyloxy, -C₁ to C₂₀ alkylamino, -OH, -OR², -NH₂, -NHR², -NR²₂, -C(O)OH, -C(O)OR², -C(O)NH₂, -C(O)NHR², -C(O)NR²₂, -O(CO)H, -O(CO)R², -NH(CO)H, -NH(CO)R², - NR²(CO)H, -NR²(CO)R², -SH, -SR², -SO₂H, -SO₂R², -SO₃R², -SO₃H, -SiR²₃, -NO₂, -CN, - F, -Cl, -Br, -I, and -(CHR³-NR⁴R⁵); and each R² is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, -C₂ to C₂₀ alkenyl, -C₂ to C₂₀ alkynyl, -C₁ to C₂₀ alkoxy, and -C₁ to C₂₀ alkylamino. More preferably said optional substitution is selected from: -C₁ to C₂₀ alkyl, -C₁ to C₂₀ haloalkyl, -C₂ to C₂₀ alkenyl, -C₁ to C₂₀ alkyloxy, -C₁ to C₂₀ alkylamino, -OH, -OR², -NH₂, -NHR², -NR²₂, -C(O)OH, -C(O)OR², -C(O)NH₂, - C(O)NHR², -C(O)NR²₂, -SO₂H, -SO₂R², -SO₃R², -SO₃H, -NO₂, -CN, -F, -Cl, -Br, -I, and - (CHR³-NR⁴R⁵); and each R² is independently selected from: -C₁ to C₂₀ alkyl, -C₁ to C₂₀ haloalkyl, -C₂ to C₂₀ alkenyl, -C₁ to C₂₀ alkoxy, and -C₁ to C₂₀ alkylamino. Even more preferably said optional substitution is independently selected from: -C₁ to C₂₀ alkyl, -C₂ to C₂₀ alkenyl, -OH, -OR², -NH₂, -NHR², -NR²₂, -C(O)OH, -C(O)OR², -C(O)NH₂, - C(O)NHR², -C(O)NR²₂, -F, -Cl, -Br, -I, and -(CHR³-NR⁴R⁵); and each R² is independently selected from: -C₁ to C₂₀ alkyl.

Any of the embodiments described herein in relation to an optionally substituted - (CHR³)-(6 to 10 membered aromatic group) or an optionally substituted -(CHR³)-(5 to 10 membered heteroaromatic group) may apply to such a group in the context of R or R'. Any of the specific substituents which may form part of the optional substitution may also be present on an optionally substituted -(6 to 10 membered aromatic group) or an optionally substituted -(5 to 10 membered heteroaromatic group) in the context of R, R¹, or R².

A specific example of an optionally substituted -(CHR³)-(6 to 10 membered aromatic group) which may be present on ring A is substituent of structure (B) below: 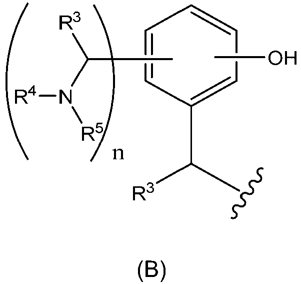 wherein 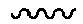 represents the point of attachment to the remainder of the molecule; wherein R¹, R², R³, R⁴, and R⁵ are as defined in any embodiment described herein; wherein n is 0, 1, 2, or 3, preferably n is 1 or 2. For example, ring A may be substituted with one or two B substituents.

Preferably, the substituent of structure (B) is of the formula (B1) or (B2):

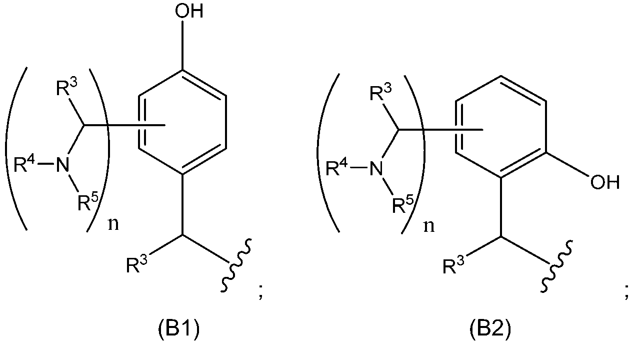

More preferably wherein each substituent of structure (B) is of the formula (B1i), (B2i), (B1ii), or (B2ii):

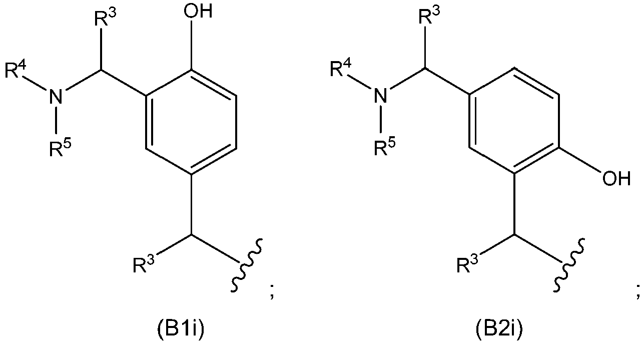

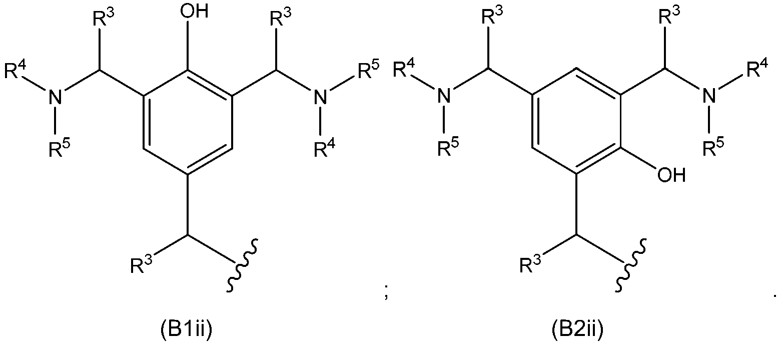

The aromatic ring of the substituent of formula (B), (B1), (B2), (B1i), (B1ii), (B2i), or (B2ii) may be further substituted at any available ring positions with one or more further substituents as described above in relation to the optional substitution possible on an optionally substituted -(CHR³)-(6 to 10 membered aromatic group), an optionally substituted -(CHR³)-(5 to 10 membered heteroaromatic group), an optionally substituted -(6 to 10 membered aromatic group), or an optionally substituted -(5 to 10 membered heteroaromatic group). Preferably, the aromatic ring of the substituent of formula (B), (B1), (B2), (B1i), (B1ii), (B2i), or (B2ii) is further substituted with another activating group such as those described in Table 1.

It is also preferable that where ring A is substituted with R^{1a} or R^{1b} as described above, that one or two substituents of structure (B) are present at positions ortho to an R^{1a} or R^{1b}.

Ring A is substituted with z -(CHR³-NR⁴R⁵) Mannich base groups, wherein z is 1, 2, 3, or 4. Therefore at least one a -(CHR³-NR⁴R⁵) Mannich base group must be present. This is because the a -(CHR³-NR⁴R⁵) Mannich base group is necessary for causing crosslinking in an epoxy resin. The epoxy resin curatives of formula (1) therefore contain at least one amine group, preferably at least one active amine group, which causes cross-linking in epoxy resins. Where the amine group is an active amine, i.e. primary or secondary amines, the active amine can act as a nucleophile to attack the epoxy groups of an epoxy resin such that the curing agent forms a covalent bond to the epoxy resin and is incorporated into a cured epoxy resin. Where the amine group is a tertiary amine group, the tertiary amine group may act as a homo-polymerisation catalyst in an epoxy system and as such may also cause cross-linking in epoxy resins. A compound bearing both active and tertiary amines is therefore also especially well-suited to acting as a curing agent.

The -(CHR³-NR⁴R⁵) Mannich base group comprises an amine group bonded to ring A via a SP³ hybridised carbon atom. The SP³ hybridised carbon atom is bonded to an R³ group, which is typically derived from the aldehyde used in the Mannich reaction. The amine is substituted with an R⁴ and an R⁵ group which are typically derived from the active amine used in the Mannich reaction. The amine of the -(CHR³-NR⁴R⁵) Mannich base group provides functionality that can react with epoxy resins, thus allowing the compound of formula (1) to act as an epoxy resin hardener. Similar -(CHR³-NR⁴R⁵) Mannich base groups may be present on an optionally substituted -(CHR³)-(6 to 10 membered aromatic group) or an optionally substituted -(CHR³)-(5 to 10 membered heteroaromatic group), such as a substituent of formula (B), (B1), (B2), (B1i), (B1ii), (B2i), or (B2ii) as discussed above, which advantageously provides additional amine functionality that can react with epoxy resins.

The R³ group, where present on a SP³ hybridised carbon atom of a -(CHR³-NR⁴R⁵) Mannich base group, or where present on a SP³ hybridised carbon atom of an optionally substituted -(CHR³)-(6 to 10 membered aromatic group) or an optionally substituted - (CHR³)-(5 to 10 membered heteroaromatic group) will be derived from the aldehyde used in the Mannich reaction, or the condensation reaction, respectively. Each R³ is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, a 6 to 10 membered aromatic group, and a 5 to 10 membered heteroaromatic group; wherein each R³ is optionally substituted with one or more groups selected from -C₁ to C₁₀ alkyl, -C₁ to C₁₀ haloalkyl, -C₁ to C₁₀ alkoxy, -OH, and =O.

Preferably, each R³ is independently selected from: -H, -C₁ to C₁₀ alkyl, -C₃ to C₁₂ cycloalkyl, -C₂ to C₁₀ alkenyl, a 6 to 10 membered aromatic group, and a 5 to 10 membered heteroaromatic group; wherein each R³ is optionally substituted with one or more groups selected from -C₁ to C₁₀ alkyl, -C₁ to C₁₀ haloalkyl, -C₁ to C₁₀ alkoxy, -OH. More preferably, each R³ is independently selected from: -H, -C₁ to C₁₀ alkyl, a 6 to 10 membered aromatic group, and a 5 to 10 membered heteroaromatic group. Most preferably, each R³ is independently selected from: -H or furanyl.

Each amine group present on the -(CHR³-NR⁴R⁵) Mannich base group is substituted with one R⁴ group and one R⁵ group. Each R⁴ is independently selected from: -H, and - C₁ to C₁₀₀ hydrocarbyl group. Each R⁵ is independently selected from: -H, and -C₁ to C₁₀₀ hydrocarbyl group. Each R⁴ and R⁵ bonded the same nitrogen atom may be taken together to form a -C₃ to C₁₀₀ hydrocarbyl group. The nature of the R⁴ and R⁵ group are defined by the active amine used in the Mannich reaction. Although modification of R⁴ and/or R⁵ after the Mannich reaction has taken place is also possible.

Preferably, at least one of R⁴ or R⁵ on at least one -(CHR³-NR⁴R⁵) Mannich base group is a hydrogen, such that the amine of at least one -(CHR³-NR⁴R⁵) Mannich base group is a secondary amine. More preferably at least one of R⁴ or R⁵ on each -(CHR³-NR⁴R⁵) Mannich base group is a hydrogen, such that the amine of each -(CHR³-NR⁴R⁵) Mannich base group is a secondary amine. Preferably, each R⁴ is independently selected from: -H, -C₁ to C₂₀ alkyl, -C₁ to C₂₀ haloalkyl, -C₃ to C₂₀ cycloalkyl, -C₂ to C_{20;} alkenyl, -C₂ to C₂₀ alkynyl, -C₁ to C₂₀ alkyloxy, -C₁ to C₂₀ alkylamino, -C₆ to C₂₀ aryl, and C₂ to C₂₀ heteroaryl; more preferably: -H, -C₁ to C₂₀ alkyl, -C₃ to C₂₀ cycloalkyl, -C₂ to C₂₀ alkenyl, and -C₁ to C₂₀ alkylamino. Preferably, each R⁵ is independently selected from: - H, -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyloxy, -C₁ to C₂₀ alkylamino, -C₆ to C₂₀ aryl, and C₂ to C₂₀ heteroaryl; more preferably: -H, -C₁ to C₂₀ alkyl, -C₃ to C₂₀ cycloalkyl, -C₂ to C₂₀ alkenyl, and -C₁ to C₂₀ alkylamino.

Polyamines are particularly well suited to act as epoxy resin curatives due to their multiple amine functionalities. Therefore, it is preferable that R⁴ and/or R⁵ comprises one or more amine group. For example, each R⁴ and/or each R⁵ may be independently selected from -H, -Me, -Et, -CH₂CH₂NH₂, -CH₂CH₂NHCH₂CH₂NH₂, and -(R⁷-NH-)_{q}-H, wherein R⁷ is a C₂ to C₁₂ alkyl group, and q = 1 to 3.

Whilst the nature of the R⁴ or R⁵ hydrocarbyl group is not particularly limited, certain functional groups may be disadvantageous are preferably not present in R⁴ or R⁵. For example, it is preferable that R⁴ or R⁵ do not comprises carboxylic acids, or carboxylic acid esters. It is more preferable that R⁴ or R⁵ do not comprise any acidic functional groups (defined as groups having a pKa of less than 14.0 at 25 °C) or any esters thereof.

In a second aspect, the present invention provides a process of preparing an epoxy resin curative of formula (1) as defined hereinabove, the method comprising performing a Mannich reaction using:
i) a precursor of formula (2); 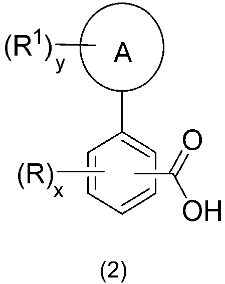
ii) one or more aldehyde having the structure HR³C=O; and
iii) one or more amine having the structure HNR⁴R⁵;
wherein R, R¹, R², R³, R⁴, R⁵, A, x and y are as defined in the first aspect, or in any embodiment described in relation thereto.

The precursor of formula (2) corresponds to the resin curative of formula (1) without the -(CHR³-NR⁴R⁵) Mannich base groups, which are added during the Mannich reaction. As ring A must comprise at least one aromatic or heteroaromatic group, ring A may act as a nucleophile in the Mannich reaction. Therefore, R, R¹, R², A, x and y of the precursor of formula (2) may be as defined in the first aspect, or any embodiment described in relation thereto. Likewise, the R³ of the aldehyde having the structure HR³C=O may be as defined in the first aspect, or any embodiment described in relation thereto. Likewise, the R⁴ and R⁵ of the one or more amine having the structure HNR⁴R⁵ may be as defined in the first aspect, or any embodiment described in relation thereto.

In the epoxy resin curative of formula (1), z is 1, 2, 3, or 4, therefore in the process of preparing an epoxy resin curative of formula (1) the process may include addition of 1, 2, 3, or 4, preferably 1 or 2, -(CHR³-NR⁴R⁵) Mannich base groups. The number of -(CHR³-NR⁴R⁵) Mannich base groups introduced may be controlled by using the appropriate molar ratios of reactants.

Various commercially available compounds are suitable for use as precursors of formula (2). Various substituted biphenyl carboxylic acids are commercially available, for example, 4'-amino-biphenyl-4-carboxylic acid, 4'-Hydroxy-4-biphenylcarboxylic acid, and 4'-Hydroxybiphenyl-2-carboxylic acid are commercially available and may be easily prepared by the skilled person. Various commercial xanthene dyes, such as fluorescein, rhodamines, and others discussed hereinabove may be suitable for use as precursors of formula (2). Carboxylic acid containing xanthene dye compounds may also be easily prepared by the skilled person, for example by Friedel-Crafts reaction of phthalic anhydride with resorcinol or 3-aminophenol, substituted derivatives of these precursors may be used to yield equivalent substitution on the precursor of formula (2).

Optionally, a combination of different aldehydes having the structure HR³C=O may be used simultaneously, or in series, during the Mannich reaction to yield an epoxy resin curative of formula (1) bearing differing R³ groups. Similarly, combination of different amines having the structure HNR⁴R⁵ may be used simultaneously, or in series, during the Mannich reaction to yield an epoxy resin curative of formula (1) bearing differing R⁴ and/or R⁵ groups.

Preferably the one or more amine having the structure HNR⁴R⁵ is one or more secondary amine. Preferably, the molar ratio of the one or more aldehyde having the structure HR³C=O to the one or more amine having the structure HNR⁴R⁵ is less than 2 : 1, preferably less than 1.5 : 1, more preferably 1.2 : 1, most preferably 1 : 1. Either of these modifications to the reaction will preclude the formation of undesirable cyclic compounds, such as benzoxazines.

Preferably, the Mannich reaction further comprises: iv) an optionally substituted 6 to 10 membered aromatic compound or an optionally substituted 5 to 10 membered heteroaromatic compound, more preferably a phenolic compound, most preferably phenol. The optionally substituted aromatic or heteroaromatic compound may take part in a condensation reaction with an aldehyde having the structure HR³C=O and ring A, to provide an R or R¹ substituent that is an optionally substituted -(CHR³)-(6 to 10 membered aromatic group) or an optionally substituted -(CHR³)-(5 to 10 membered heteroaromatic group).

Any suitable aldehyde having the structure HR³C=O may be used. Preferably, the aldehyde is formaldehyde or furfural (furan-2-carbaldehyde), and where the aldehyde is formaldehyde the formaldehyde may be introduced to the reaction in the form of a paraformaldehyde.

Any suitable amine having the structure HNR⁴R⁵, including ammonia, may be used. It is advantageous that the amine having the structure HNR⁴R⁵ comprises at least two active amine groups. As would be appreciated, one active amine group is required in order to undergo the Mannich reaction, and this active amine group may be primary or secondary. A second active amine group is useful for further reaction to take place. The further active amine group may be useful for reacting with the epoxy groups of epoxy resins, for causing crosslinking in an epoxy resin. Alternatively, the amine having the structure HNR⁴R⁵ may comprise one or more additional active amine groups which are protected by a suitable protecting group, which may subsequently be deprotected to provide one or more additional active amine groups on the resulting epoxy resin curative of formula (1). Such protecting group strategy is within the capability of the skilled person.

Suitable amines having the structure HNR⁴R⁵ may be selected from: 1) an aliphatic primary di- or tri-amine; preferably an ether-group-containing aliphatic primary di- or tri-amine; 2) an aliphatic secondary amino-containing tri-amine having two primary aliphatic amino groups; 3) a polyamine having one or two secondary amino groups, preferably products of the reductive alkylation of primary aliphatic polyamines with aldehydes or ketones; or 4) an aromatic polyamine.

Suitable amines having the structure HNR⁴R⁵ may be selected from: Dimethylaminopropylamine (DMAPA), 2,2-dimethyl-1,3-propanediamine, 1,3-pentanediamine (DAMP), 1,5-pentanediamine, 1,5-diamino-2-methylpentane (MPMD), 2-butyl-2-ethyl-1, 5-pentanediamine (C11-nododiamine), 1,6-hexanediamine, 2,5-dimethyl-1,6-hexanediamine, 2,2 (4), 4-trimethylhexamethylenediamine (TMD), 1,7-heptanediamine, 1, 8-octanediamine, 1,9-nonanediamine, 1,10-decanediamine, 1,11-undecandiamine, 1,12-dodecanediamine, 1,2-,1,3- or 1,4-diaminocyclohexane, bis(4-aminocyclohexyl) methane (H 12-MDA), bis(4-amino-3-methylcyclohexyl) methane, bis(4-amino-3-ethylcyclohexyl) methane, bis(4-amino-3,5-dimethylcyclohexyl) methane, bis(4-amino-3-ethyl-5-methylcyclohexyl) methane, 1-amino-3-aminomethyl-3,5,5-trimethylcyclohexane (isophoronediamine or IPDA), 2- or 4-methyl-1,3-diaminocyclohexane or mixtures thereof, 1,3-bis(aminomethyl) cyclohexane, 1,4-bis(aminomethyl) cyclohexane, 2,5 (2,6)-bis(aminomethyl) bicyclo [2.2.1] heptane (NBDA), 3(4), 8(9)-Bis(aminomethyl) tricyclo [5.2. 1.02 '6] decane, 1,4-diamino-2,2,6-trimethylcyclohexane (TMCDA), 1,8-Me N-thandiamin, 3,9-bis(3-aminopropyl)-2,4,8,10-tetraoxaspiro [5.5] undecane, 1,3-bis(aminomethyl) benzene (MXDA), 1, 4-bis(aminomethyl) benzene, and combinations thereof; or wherein the polyamine is an aliphatic primary triamine selected from 4-aminomethyl-1,8-octanediamine, 1,3,5-tris(aminomethyl) benzene, 1,3,5-tris(aminomethyl) cyclohexane, tris(2-aminoethyl) amine, tris(2-amino-propyl) amine, tris(3-aminopropyl) amine and combinations thereof.

Suitable amines having the structure HNR⁴R⁵ may be selected from: ether-group-containing aliphatic primary di-amines. Suitable ether-group-containing aliphatic primary di-amines include those selected from: bis (2-aminoethyl) ether, 3,6-dioxaoctane-1,8-diamine, 4,7-dioxadecane-1, 10 diamine, 4,7-dioxadecane-2,9-diamine, 4,9-dioxadodecane-1,12-diamine, 5,8-dioxadodecane-3,10-diamine, 4,7,10-trioxatridecan-1,13-diamine, or oligomers of any of the foregoing; polytetrahydrofurandiamines, such as bis(3-aminopropyl) polytetrahydrofurans, cycloaliphatic diamines containing ether groups preferably derived from propoxylation and subsequent amination of 1,4-dimethylol cyclohexane (for example, available as Jeffamine (RTM) particular RFD 270 (Huntsman)), and polyoxyalkylenediamines, such as polyoxypropylenediamines, preferably derived from amination of polyoxyalkylenediols, for example, those available under the name Jeffamine (RTM) (from Huntsman), under the name polyetheramine (from BASF) or under the name PC amine (RTM) (from Nitroil). In particular, suitable polyoxyalkylene di- or triamines are Jeffamine (RTM) D-230, Jeffamine (RTM) D-400, Jeffamine (RTM) D-2000, Jeffamine (RTM) EDR-104, Jeffamine (RTM) EDR-148, Jeffamine (RTM) EDR-176, Jeffamine (RTM) T-403, Jeffamine (RTM) T-3000, Jeffamine (RTM) T-5000, or the corresponding amines by BASF or Nitroil.

Suitable amines having the structure HNR⁴R⁵ may be selected from: ether-group-containing aliphatic primary tri-amines. Suitable ether-group-containing aliphatic primary tri-amines include polyoxyalkylenetriamines, preferably derived from amination of polyoxyalkylenetriols.

Suitable amines having the structure HNR⁴R⁵ may be selected from aliphatic secondary amino-containing tri-amines having two primary aliphatic amino groups, including: 3-(2-aminoethyl) aminopropylamine, bis(hexamethylene) triamine (BHMT), diethylenetriamine (DETA), triethylenetetramine (TETA), tetraethylenepentamine (TEPA), pentaethylenehexamine (PEHA) or higher homologs of linear polyethyleneamines such as polyethylenepolyamine with 5 to 7 ethylenepolyamine units (HEPA), products of the multiple cyanoethylation or cyanobutylation and subsequent hydrogenation of primary polyamines having at least two primary amino groups, such as Dipropylenetriamine (DPTA), N-(2-aminoethyl)-1,3-propanediamine (N3-amine), N,N'-bis(3-aminopropyl) ethylenediamine (N4-amine), N,N'-bis (3-aminopropyl)-1,4-diaminobutane, N5-(3-aminopropyl)-2-methyl-1,5-pentanediamine, N3-(3-aminopentyl)-1,3-pentanediamine, N5-(3-Amino-1-ethyl-propyl)-2-methyl-1,5-pentanediamine, N,N'-bis (3-amino-1-ethylpropyl)-2-methyl-1,5-pentanediamine, and combinations thereof.

Suitable amines having the structure HNR⁴R⁵ may be selected from polyamines having one or two secondary amino groups. Suitable polyamines having one or two secondary amino groups include: N¹-benzyl-1,2-propanediamine, N¹-(4-methoxybenzyl)-1,2-propanediamine, N-benzyl-1,3-bis (aminomethyl) benzene, N,N'-Dibenzyl-1,3-bis (aminomethyl) benzene, N-2-ethylhexyl-1,3-bis (aminonyl) benzene, N,N'-bis(2-ethylhexyl)-1,3-bis(aminomethyl) benzene, and partially styrenated polyamines, such as partially styrenated 1,3-bis(aminomethyl) benzene (MXDA) (available from Mitsubishi gas Chemical).

Suitable amines having the structure HNR⁴R⁵ may be selected from aromatic polyamines. Suitable aromatic polyamines include m- and p-phenylenediamine, 4,4'-, 2,4'- and/or 2,2'-diaminodiphenylmethane, 3,3'-dichloro-4,4'-diaminodiphenylmethane (MOCA) diisocyanate, 2,4- and / or 2,6-toluene diamine (available as Ethacure 300 from Albemarle (RTM)), mixtures of 3,5-dimethylthio-2,4- and -2,6-toluene diamine, mixtures of 3,5-diethyl -2,4- and -2,6-toluylenediamine (DETDA), 3,3',5,5'-tetraethyl-4,4'-diaminodiphenylmethane (M-DEA), 3,3',5,5'-tetraethyl-2,2'-dichloro-4,4'-diaminodiphenylmethane (M-CDEA), 3,3'-diisopropyl-5,5'-dimethyl-4,4'-diaminodiphenylmethane (M-MIPA), 3,3',5,5'-tetraisopropyl-4,4'-diaminodiphenylmethane (M-DIPA), 4,4'-diamino diphenylsulfone (DDS), 4-amino-N-(4-aminophenyl) benzenesulfonamide, 5,5'-methylenedianthranilic acid, dimethyl (5,5'-methylenedithethranilate), 1,3-propylenebis(4-aminobenzoate), 1,4-butylenebis(4-aminobenzoate), polytetramethyleneoxide-bis(4-aminobenzoate), 1,2-bis(2-aminophenylthio)ethane, 2-methylpropyl (4-chloro-3,5-diaminobenzoate), t-Butyl (4-chloro-3,5-diaminobenzoate), and combinations thereof.

The amines having the structure HNR⁴R⁵ described above can also be adducted with epoxides or epoxy resins and further modification may be possible with fatty acids to form amido or polyamides. Optionally, said amines having the structure HNR⁴R⁵ further comprises amido or polyamide functional groups derived from adduction of the polyamine with one or more epoxides and/or modification with one or more fatty acids.

Typically, the reaction temperature is maintained at at least 40 °C, preferably at least 50 °C, more preferably at least 60 °C, even more preferably at least 70 °C, even more preferably at least 80 °C, even more preferably at least 90 °C, even more preferably at least 100 °C, even more preferably at least 110 °C, most preferably at least 120 °C.

Any suitable solvent may be used, or alternatively no solvent is used. The precursor of formula (2) may be added neat or in solution, such as aqueous solution. As would be appreciated, water is produced in the Mannich reaction and a condensation reaction, the skilled person is capable of various method of removing the water of reaction, for example, atmospheric distillation.

Typically, the molar ratio of the amine having the structure HNR⁴R⁵ to the aldehyde having the structure HR³C=O is 1 : 1, or ranging from 1 : 10 to 10 : 1, preferably from 1 : 5 to 5 : 1, more preferably from 1: 2 to 2 : 1, most preferably from 1 : 1.5 to 1.5 : 1.

Typically, the molar ratio of the amine having the structure HNR⁴R⁵ to the precursor of formula (2), or the aldehyde having the structure HR³C=O to the precursor of formula (2) will depend on the number of -(CHR³-NR⁴R⁵) Mannich base groups desired on the epoxy resin curative of formula (1), but will typically be 1 : (1 per -(CHR³-NR⁴R⁵) Mannich base groups desired), but may be from 1 : (3 per -(CHR³-NR⁴R⁵) Mannich base groups desired) to 3 : (1 per -(CHR³-NR⁴R⁵) Mannich base groups desired), preferably from 1 : (2 per -(CHR³-NR⁴R⁵) Mannich base groups desired) to 2 : (1 per - (CHR³-NR⁴R⁵) Mannich base groups desired).

Where an optionally substituted 6 to 10 membered aromatic compound or an optionally substituted 5 to 10 membered heteroaromatic compound is used, the molar ratio of the optionally substituted 6 to 10 membered aromatic compound or the optionally substituted 5 to 10 membered heteroaromatic compound to the precursor of formula (2) will depend on the number of optionally substituted -(CHR³)-(6 to 10 membered aromatic groups) or optionally substituted -(CHR³)-(5 to 10 membered heteroaromatic groups) desired on the epoxy resin curative of formula (1), but will typically be 1 : (1 per optionally substituted -(CHR³)-(6 to 10 membered aromatic group) or optionally substituted -(CHR³)-(5 to 10 membered heteroaromatic group) desired), but may be from 1 : (3 per optionally substituted -(CHR³)-(6 to 10 membered aromatic group) or optionally substituted -(CHR³)-(5 to 10 membered heteroaromatic group) desired) to 3 : (1 per optionally substituted -(CHR³)-(6 to 10 membered aromatic group) or optionally substituted -(CHR³)-(5 to 10 membered heteroaromatic group) desired), preferably from 1 : (2 per optionally substituted -(CHR³)-(6 to 10 membered aromatic group) or optionally substituted -(CHR³)-(5 to 10 membered heteroaromatic group) desired) to 2 : (1 per optionally substituted -(CHR³)-(6 to 10 membered aromatic group) or optionally substituted -(CHR³)-(5 to 10 membered heteroaromatic group) desired).

Where an optionally substituted 6 to 10 membered aromatic compound or an optionally substituted 5 to 10 membered heteroaromatic compound is used, the molar ratio of the optionally substituted 6 to 10 membered aromatic compound or the optionally substituted 5 to 10 membered heteroaromatic compound to the aldehyde having the structure HR³C=O will typically be 1 : 1, but may be from 1 : 3 to 3 : 1, preferably from 1 : 2 to 2 : 1. However, where an optionally substituted 6 to 10 membered aromatic compound or an optionally substituted 5 to 10 membered heteroaromatic compound is used, the aldehyde having the structure HR³C=O consumed by the condensation reaction between the optionally substituted 6 to 10 membered aromatic compound or the optionally substituted 5 to 10 membered heteroaromatic compound and the precursor of formula (2) will be in addition to the aldehyde having the structure HR³C=O consumed by the Mannich reaction.

This means that the molar ratio of the total aldehyde having the structure HR³C=O to the optionally substituted 6 to 10 membered aromatic compound or the optionally substituted 5 to 10 membered heteroaromatic compound to the amine having the structure HNR⁴R⁵, will typically be at least 2 : 1 : 1.

Typically, the amine having the structure HNR⁴R⁵, the optionally substituted 6 to 10 membered aromatic compound or the optionally substituted 5 to 10 membered heteroaromatic compound if present, and the precursor of formula (2), are combined in a first step, optionally wherein the precursor of formula (2) is added last. The aldehyde having the structure HR³C=O may then be added in a second step. Optionally, the first step includes heating, preferably to at least 40 °C, preferably at least 50 °C, more preferably at least 60 °C. Optionally the reaction mixture may be cooled, for example, to 25 °C or lower, prior to addition of the aldehyde having the structure HR³C=O. Optionally, the second step includes heating, preferably to at least 40 °C, preferably at least 50 °C, more preferably at least 60 °C, more preferably at least 70 °C, more preferably at least 80 °C, most preferably at least 90 °C. As would be appreciated, the optimum temperature and timings of the various stages of the reaction would depend on the specific starting materials used, as well as any other reaction conditions such as scale, solvent choice, or catalysis etc. A Lewis acid may be used to catalyse the Mannich reaction.

In a third aspect, the present invention relates to an epoxy resin curative composition comprising an epoxy resin curative as defined herein.

It has been found that the curative composition may usefully comprise further amine compounds in order to adjust its properties to adapt the composition to a desired purpose. For example, properties such as the viscosity or active hydrogen equivalent weight may be adjusted by the presence of one or more further amine compounds. It has also been usefully found that excess amine having the formula HNR⁴R⁵ used in the Mannich reaction can be retained to adjust properties of the curative composition without the need for separation. This allows for a more efficient one pot preparation of such compositions. Nevertheless, separation of any excess amine having the formula HNR⁴R⁵ used in the Mannich reaction could be easily achieved by the skilled person, if desired.

Preferably, the curative composition comprises one or more further epoxy resin curatives. More preferably, the curative composition further comprises one or more amine having the formula HNR⁴R⁵, wherein R⁴ and R⁵ are as defined in the first aspect, or any embodiments described in relation thereto, and are the same as the R⁴ and R⁵ groups, respectively, which are present as amine substituents in the epoxy resin curative of formula (1) also comprised within the composition, i.e. wherein the curative composition further comprises an amine compound wherein the amine compound is the amine from which at least one of the -(CHR³-NR⁴R⁵) Mannich base groups is derived.

Any suitable organic solvent may be used as a solvent or diluent in a curative composition of the present invention, for example MeCN, benzene, methanol, ethanol, IPA, butanol, chloroform, DCM, diethyl ether, DMF, dioxane, ethyl acetate, petroleum ether, kerosine, pentane, hexane, heptane, MTBE, NMP, THF, toluene, xylene and mixtures thereof. Benzyl alcohol is a particularly suitable solvent or diluent for epoxy resin curatives of formula (1) or a composition thereof. As would be appreciated, methods of forming and handling a curative composition from a given compound would be known by the skilled person.

In a fourth aspect, the present invention relates to a method for preparing a cured epoxy resin, said method comprising:
a) contacting an epoxy resin with an epoxy resin curative as defined herein or a composition as defined herein; and
b) forming a cured epoxy resin, preferably wherein the epoxy resin is selected from glycidyl amines, epoxidized novolacs and bisphenols (A or F) or halogenated analogues thereof.

Examples of epoxy-based resins suitable for use in the present invention include polyglycidyl ethers of polyhydric phenols, epoxidised novolacs or similar glycidated polyphenolic resins, glycidated bisphenols, such as glycidated bisphenol A or F, or halogenated (e.g. chlorinated or fluorinated) analogues thereof; polyglycidyl ethers of alcohols, glycols or polyglycols, and polyglycidyl esters of polycarboxylic acids. Preferred examples of epoxy resins are polyglycidyl ethers of a polyhydric phenol. Polyglycidyl ethers of polyhydric phenols can be produced, for example, by reacting an epihalohydrin with a polyhydric phenol in the presence of an alkali. Examples of suitable polyhydric phenols include: 2,2-bis (4-hydroxyphenyl) propane (bisphenol-A); 2,2-bis(4-hydroxy-3-tert-butylphenyl)propane; 1,1-bis(4-hydroxyphenyl) ethane; 1,1-bis(4-hydroxyphenyl) isobutane; bis(2-hydroxy-1-naphthyl) methane; 1,5-dihydroxynaphthalene; 1,1-bis(4-hydroxy-3-alkylphenyl) ethane and the like. Commercial examples of preferred epoxy resins that may be used include EPILOK 60-600 (RTM).

The epoxy resin to which the epoxy resin curative of the present invention is added may include other additives, such as flow control additives, antifoam agents, or anti-sag agents, as well as other additives such as pigments, reinforcing agents, fillers, elastomers, stabilizers, extenders, plasticizers, or flame retardants depending on the application.

The epoxy resin can be any epoxy resin which can be cured by the epoxy resin curative of the present invention. Generally, the epoxy resin can be any curable epoxy resin and may have, for instance, a 1,2-epoxy equivalency greater than one and preferably, on average, more than 1.5 epoxide groups per molecule. The epoxy resin can be saturated or unsaturated, linear or branched, aliphatic, cycloaliphatic, aromatic or heterocyclic, and may be substituted, provided such substituents do not interfere with the curing reaction. Such substituents can include bromine.

In a fifth aspect, the present invention relates to a cured epoxy resin prepared, or preparable, by the methods described herein.

In a sixth aspect, the present invention relates to the use of an epoxy resin curative as defined herein or of a composition as defined herein, for causing crosslinking in an epoxy resin.

The invention will now be described by reference to the following non-limiting Examples.

### EXAMPLES

### EXAMPLE 1 - Preparation of a Rapid Curing Epoxy Resin Curative

94 grams [1 Mol] of Phenol and 510 grams [5 Mols] of Dimethylaminopropylamine [DMAPA] was added to a 2 litre, round-bottomed flask equipped with a condenser, mechanical stirrer, addition funnel, dropping funnel, and thermometer. The flask was configured for atmospheric reflux, the agitator started, and the contents were then heated to 60°C. A Nitrogen blanket was applied and 90 grams [5 Mols] of water was added followed by 332 grams of Fluorescein [1 Mol] which was added in 3 aliquots over 205 minutes whilst increasing the temperature to 80°C. The Fluorescein initially settled out but eventually dissolved in the water. The contents were cooled to 21°C and 410 grams [5 Mols] of a 36.5% aqueous solution of Formalin was added in 5 aliquots over a 60-minute period controlling the exotherm in order to maintain the temperature between 40 and 55°C throughout. The contents were then heated to 60°C and held for 30 minutes after which time the contents were heated to 95°C and held for 120 minutes. A sample was taken and evaluated for viscosity, η = 3400 mPa•s at 25°C [Cone and Plate Viscometer].

The flask was configured for atmospheric distillation and heated to 120°C over a 180-minute period receiving distillate between 104-118°C, distillation ceased at 120°C.

The resulting material was then diluted with benzyl alcohol in a 50:50 mass ratio and cooled to form Mixture 1. Mixture 1 contains a number of compounds which are epoxy resin curatives of the present invention, which are formed by this reaction, some of which are outlined below. As would be appreciated, more combinations of substitution patterns are also possible.

### Structures Formed in Mixture 1

E=

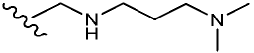

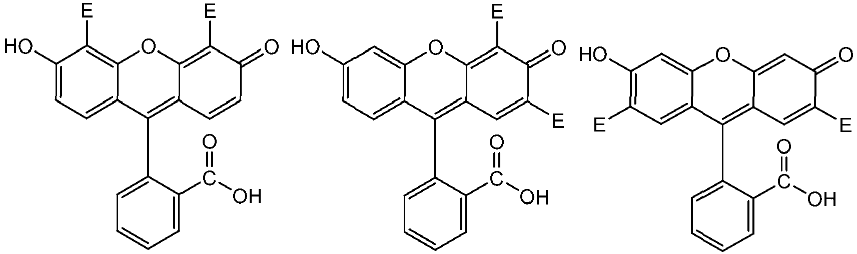

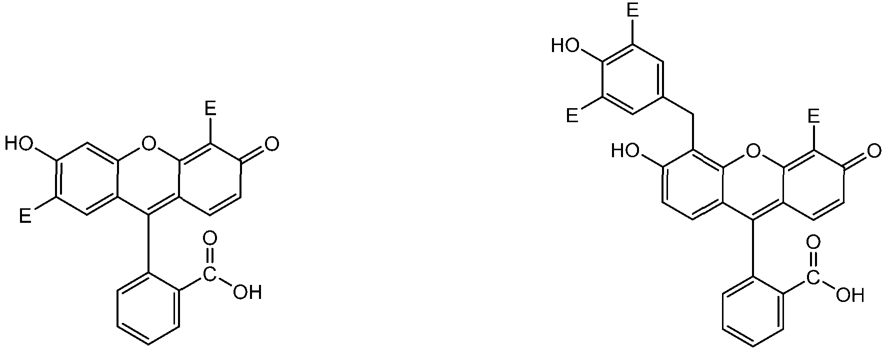

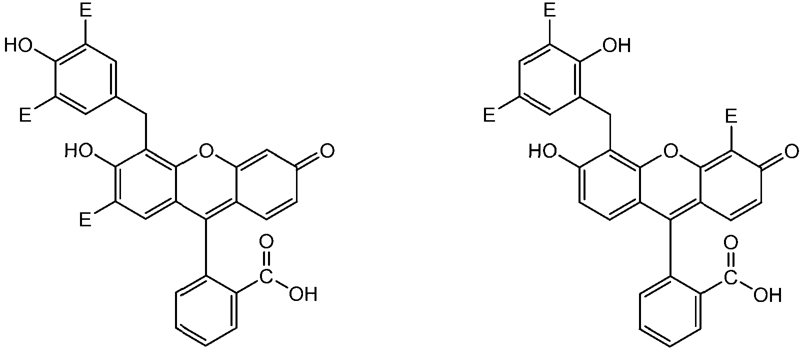

The physical properties of Mixture 1 are shown below.

| **Physical test results** | | |
|---|---|---|
| Property | Result | Comments |
| Appearance | Dark solution | Distinctive colour |
| Viscosity at 25°C | 5500 mPa•s | Amber colour |
| AHEW | 380 | Calculated |
| Reactivity* | 9.1 minutes | Low exotherm, see Figure 1 |

| | | |
|---|---|---|
| *150 g mass using a Techne Gelation Timer | | |

### Example 2 - Curing Properties of the Rapid Curing Epoxy Resin Curative

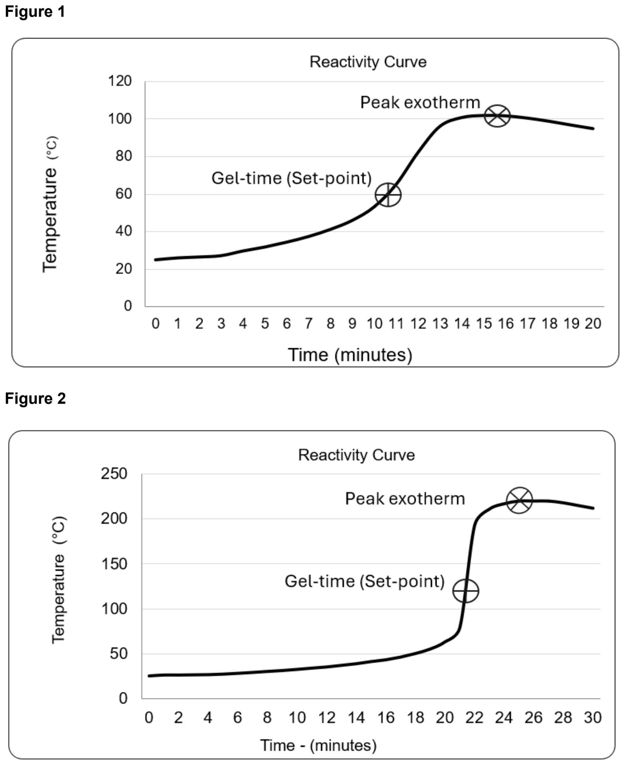

The reactivity of 150 grams of Mixture 1 prepared in Example 1 combined with a stoichiometric amount of a bisphenol A diglycidyl ether epoxy of EEW = 190 was measured using a Techne Gelation Timer. The reactivity of 150 grams of the known epoxy resin curative CURAMINE 31-537 LFP (RTM) was measured using the same method as a control. The structure of CURAMINE 31-537 LFP (RTM) is shown below. Figure 1 shows the reactivity curve of Mixture 1. Figure 2 shows the reactivity curve of the CURAMINE 31-537 LFP (RTM) control.

As can be seen from these figures, the epoxy resin curative of the present invention reached the gel time (set-point) much more rapidly than the control epoxy resin curative. The epoxy resin curative of the present invention also produced a much lower peak exotherm than the control epoxy resin curative.

CURAMINE 31-537 LFP (RTM) is a known phenolic Mannich base prepared using phenol, formaldehyde, and triethylenetetramine in a 1:2:2 ratio. An exemplary structure of CURAMINE 31-537 LFP (RTM) is shown below.

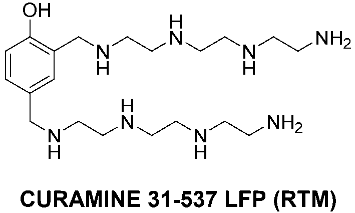

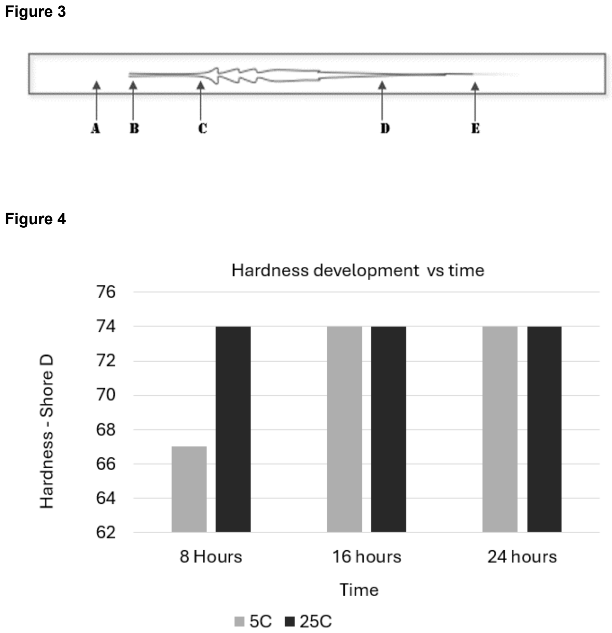

A thin film cure experiment was performed using 150 grams of Mixture 1 prepared in Example 1 at 5 °C and at 25 °C. A similar thin film cure experiment was performed using 150 grams of the CURAMINE 31-537 LPF (RTM) control epoxy resin diluted in benzyl alcohol in a 50:50 mass ratio, and combined with salicylic acid so as to provide the same molar concentration of carboxylic acid groups as are present in Mixture 1 curative at 5 °C and 25 °C. In the thin film cure experiment, a stoichiometric mixture of the epoxy resin curative composition to be tested and a bisphenol A diglycidyl ether epoxy of EEW = 190 is drawn across a glass slide at a depth of 200 µm and placed in a BK dry time recorder. A needle is placed in this mixture and drawn through it at a controlled rate starting at point "A" and whilst the liquid is fluid the material flows around the needle as it progresses along the coated slide. Figure 3 shows an image of the thin film with points A to E labelled. In this example point "B" is when the material starts to set and offer some resistance, so the needle begins to leave a mark - set to touch but tacky. At this point, the needle is creating a thin track but as it approaches Point C through to D - the film is dragged by the needle point. At point E the epoxy resin has cured. Full cross-linking [post-cure] times to maximum values varies. However, the Shore D results suggest/confirm this has developed very quickly. The time taken for the thin films to cure at points A to E shown in Figure 3 are given below.

**Table 2: thin film cure using Mixture 1**

| Reference | Description | 5 °C | 25 °C |
|---|---|---|---|
| Point A | Start | - | - |
| Point B | Set to touch | 53 minutes | 15 minutes |
| Point C | Tack free | 2 hours 4 minutes | 22 minutes |
| Point D | Hard dry | 2 hours 22 minutes | 24 minutes |
| Point E | Through dry | 2 hours 59 minutes | 26 minutes |

**Table 3: thin film cure using CURAMINE 31-537LFP (RTM) control**

| Reference | Description | 5 °C | 25 °C |
|---|---|---|---|
| Point A | Start | | - |
| Point B | Set to touch | No cure | 20 minutes |
| Point C | Tack free | No cure | 29 minutes |
| Point D | Hard dry | No cure | 38 minutes |
| Point E | Through dry | No cure | 46 minutes |

The epoxy resin curative of the present invention shows an excellent cure response at low temperature and very fast property development/through cure. The epoxy resin curative of the present invention is extremely fast compared with the known control epoxy (CURAMINE 31-537 LFP (RTM)) showing significant advantages in low temp cure speed.

### Example 3 - Hardness Development of the Rapid Curing Epoxy Resin Curative

Figure 4 depicts the Shore D hardness value of Mixture 1 at three time points during curing of a stoichiometric amount of a bisphenol A diglycidyl ether epoxy of EEW = 190 at 5 °C and at 25 °C. The hardness was measured at 8 hours, 16 hours, and at 24 hours.

The Shore D hardness is affected by the benzyl alcohol diluent which acts as a plasticiser, but nevertheless hardness development is extremely fast as may be expected with such high reactivity. With curing at curing at 5 °C the maximum hardness was reached prior to 16 hours, and with curing at curing at 25 °C the maximum hardness was reached prior to 8 hours. The epoxy resin curatives of the present invention are therefore demonstrated to provide extremely rapid curing properties. Known epoxy resin curatives would typically take up to 24 hours to reach maximum hardness at 5 °C.

## Claims

1. An epoxy resin curative of formula (1): 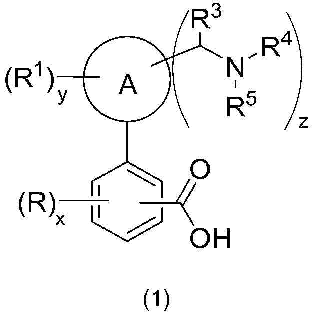 wherein:
ring A is a monocyclic or polycyclic ring comprising at least one aromatic or
heteroaromatic group;
x is 0, 1, 2, 3, or 4;
y is 0, 1, 2, 3, 4, 5, or 6;
z is 1, 2, 3, or 4;
each R is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₂ to C₂₀ alkenyl, -C₂ to C₂₀ alkynyl, -C₁ to C₂₀ alkyloxy, -C₁ to C₂₀ alkylamino, -OH, -OR², -NH₂, -NHR², -NR²₂, -C(O)OH, -C(O)OR², - C(O)NH₂, -C(O)NHR², -C(O)NR²₂, -O(CO)H, -O(CO)R², -NH(CO)H, -NH(CO)R², - NR²(CO)H, -NR²(CO)R², -SH, -SR², -SO₂H, -SO₂R², -SO₃R², -SO₃H, -SiR²₃, -NO₂, -CN, - F, -Cl, -Br, and -I;
each R¹ is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₂ to C₂₀ alkenyl, -C₂ to C₂₀ alkynyl, -C₁ to C₂₀ alkyloxy, -C₁ to C₂₀ alkylamino, -OH, -OR², -NH₂, -NHR², -NR²₂, -C(O)OH, -C(O)OR², - C(O)NH₂, -C(O)NHR², -C(O)NR²₂, -O(CO)H, -O(CO)R², -NH(CO)H, -NH(CO)R², - NR²(CO)H, -NR²(CO)R², -SH, -SR², -SO₂H, -SO₂R², -SO₃R², -SO₃H, -SiR²₃, -NO₂, -CN, - F, -Cl, -Br, -I, =O, =NH, =NR², =NH₂⁽⁺⁾, =NHR²⁽⁺⁾, and =NR²₂⁽⁺⁾;
each R² is independently selected from: -C₁ to C₂₀ alkyl, -C₁ to C₂₀ haloalkyl, -C₃ to C₂₀ cycloalkyl, -C₄ to C₂₀ heterocycloalkyl, -C₅ to C₂₀ cycloalkenyl, -C₅ to C₂₀ heterocycloalkenyl, an optionally substituted 6 to 10 membered aromatic group, an optionally substituted 5 to 10 membered heteroaromatic group, -C₂ to C₂₀ alkenyl, -C₂ to C₂₀ alkynyl, -C₁ to C₂₀ alkoxy, and -C₁ to C₂₀ alkylamino;
each R³ group is independently selected from: -H, -C₁ to C₁₀ alkyl, -C₁ to C₁₀ haloalkyl, -C₃ to C₁₂ cycloalkyl, -C₂ to C₁₀ alkenyl, -C₂ to C₁₀ alkynyl, a 6 to 10 membered aromatic group, and a 5 to 10 membered heteroaromatic group; wherein each R³ is optionally substituted with one or more groups selected from -C₁ to C₁₀ alkyl, -C₁ to C₁₀ haloalkyl, -C₁ to C₁₀ alkoxy, -OH, and =O;
each R⁴ is independently selected from hydrogen or a C₁ to C₁₀₀ hydrocarbyl group;
each R⁵ is independently selected from hydrogen or a C₁ to C₁₀₀ hydrocarbyl group; wherein each R⁴ and R⁵ may be taken together with the nitrogen atom to which they are attached to form a cyclic C₃ to C₁₀₀ hydrocarbyl group;
or a salt thereof.

2. The epoxy resin curative of Claim 1, wherein the epoxy resin curative has the formula (1a), or (1c):

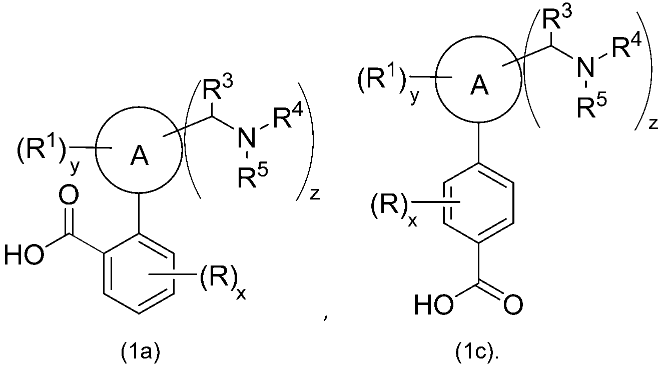

3. The epoxy resin curative of Claim 1 or Claim 2, wherein ring A is a structure selected from: 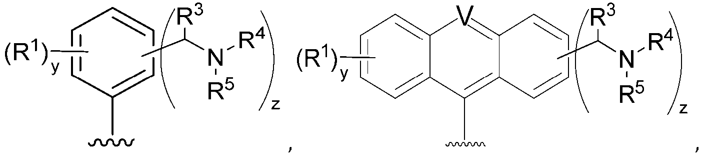 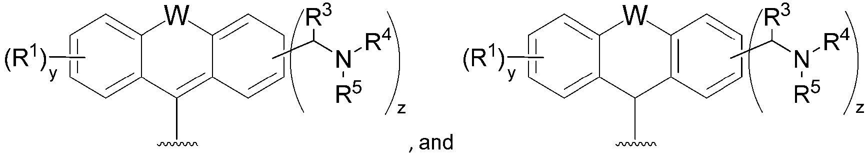
wherein 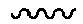 represents the point of attachment to the remainder of the molecule;
wherein V is selected from: -N=, -CR⁶=, and -SiR⁶=; wherein W is selected from: -O-, - NR⁶-, -S-, -S(O)-, -S(O₂)-, -CR⁶₂-, and -SiR⁶₂-; and wherein each R⁶ is independently selected from hydrogen, or -C₁ to C₆ alkyl; preferably wherein W is -O-; and/or
wherein ring A is a structure selected from: 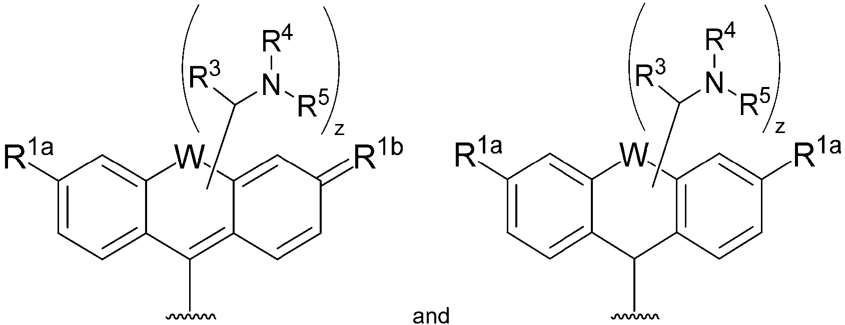
wherein each R^{1a} is independently selected from: -OH, -OR², -NH₂, -NHR², and -NR²₂; and wherein R^{1b} is selected from =O, =NH, =NR², =NH₂⁽⁺⁾, =NHR²⁽⁺⁾, and =NR²₂⁽⁺⁾; preferably wherein each 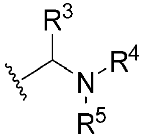 group is present at a position ortho to an R^{1a} or R^{1b}; and wherein 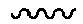 represents the point of attachment to the remainder of the molecule.

4. The epoxy resin curative of any one of the preceding claims, wherein ring A is further substituted with one or two substituents of structure (B): 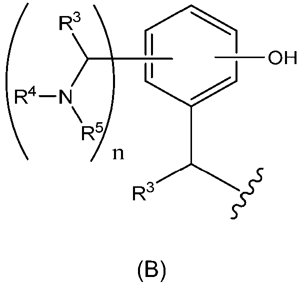
wherein 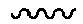 represents the point of attachment to the remainder of the molecule;
wherein R¹, R², R³, R⁴, and R⁵ are as defined in any preceding claim; wherein n is 0, 1, 2, or 3; preferably wherein each substituent of structure (B) is of the formula (B1) or (B2): 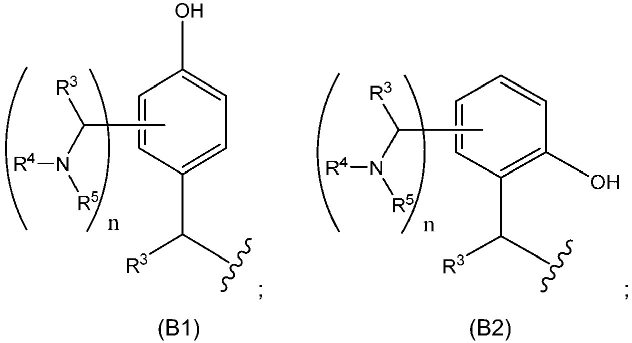
more preferably wherein each substituent of structure (B) is of the formula (B1i), (B2i), (B1ii), or (B2ii):

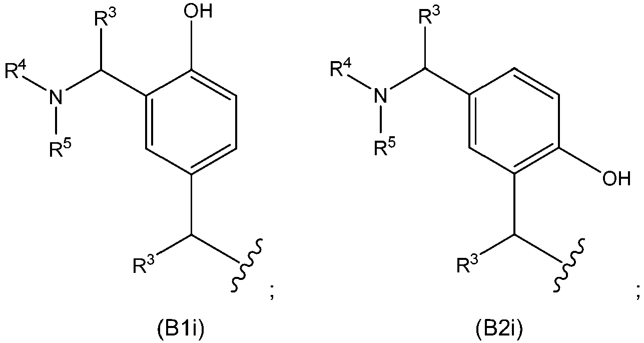

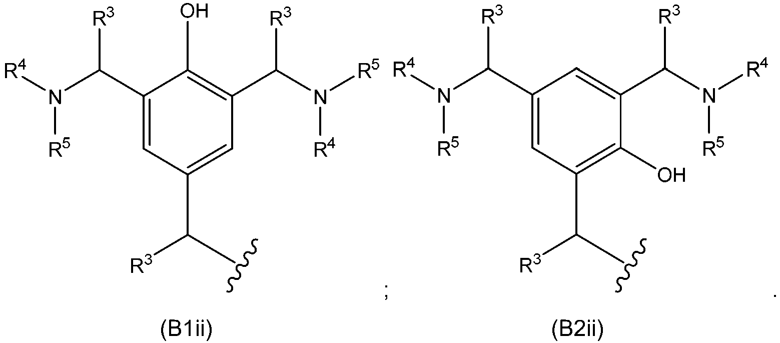

5. The epoxy resin curative of claim 4, when dependent on claim 3, wherein the one or two substituents of structure (B) are present at positions ortho to an R^{1a} or R^{1b}.

6. The epoxy resin curative of any one of the preceding claims, wherein each R is independently selected from: -C₁ to C₂₀ alkyl, -C₁ to C₂₀ haloalkyl, -C₂ to C₂₀ alkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₁ to C₂₀ alkyloxy, -C₁ to C₂₀ alkylamino, -OH, -OR², -NH₂, - NHR², -NR²₂, -C(O)OH, -C(O)OR², -C(O)NH₂, -C(O)NHR², -C(O)NR²₂, -SO₂H, -SO₂R², - SO₃R², -SO₃H, -NO₂, -CN, -F, -Cl, -Br, and -I; and
wherein each R² is independently selected from: -C₁ to C₂₀ alkyl, -C₁ to C₂₀ haloalkyl, -C₂ to C₂₀ alkenyl, -C₁ to C₂₀ alkoxy, and -C₁ to C₂₀ alkylamino;
preferably wherein each R is independently selected from: -C₁ to C₂₀ alkyl, -C₂ to C₂₀ alkenyl, -OH, -OR², -NH₂, -NHR², -NR²₂, -C(O)OH, -C(O)OR², -C(O)NH₂, - C(O)NHR², -C(O)NR²₂, -F, -Cl, -Br, and -I; and
wherein each R² is independently selected from: -C₁ to C₂₀ alkyl.

7. The epoxy resin curative of any one of the preceding claims, wherein each R¹ is independently selected from: -C₁ to C₂₀ alkyl, -C₁ to C₂₀ haloalkyl, -C₂ to C₂₀ alkenyl, an optionally substituted 6 to 10 membered aromatic group, an optionally substituted 5 to 10 membered heteroaromatic group, an optionally substituted -(CHR³)-(6 to 10 membered aromatic group), an optionally substituted -(CHR³)-(5 to 10 membered heteroaromatic group), -C₁ to C₂₀ alkyloxy, -C₁ to C₂₀ alkylamino, -OH, -OR², -NH₂, - NHR², -NR²₂, -C(O)OH, -C(O)OR², -C(O)NH₂, -C(O)NHR², -C(O)NR²₂, -SO₂H, -SO₂R², - SO₃R², -SO₃H, -NO₂, -CN, -F, -Cl, -Br, -I, =O, =NH, =NR², =NH₂⁽⁺⁾, =NHR²⁽⁺⁾, and =NR²₂⁽⁺⁾; and
wherein each R² is independently selected from: -C₁ to C₂₀ alkyl, -C₁ to C₂₀ haloalkyl, -C₂ to C₂₀ alkenyl, -C₁ to C₂₀ alkoxy, and -C₁ to C₂₀ alkylamino;
preferably wherein each R¹ is independently selected from: -C₁ to C₂₀ alkyl, -C₂ to C₂₀ alkenyl, -OH, -OR², -NH₂, -NHR², -NR²₂, -C(O)OH, -C(O)OR², -C(O)NH₂, - C(O)NHR², -C(O)NR²₂, -F, -Cl, -Br, -I, =O, =NH, =NR², =NH₂⁽⁺⁾, =NHR²⁽⁺⁾, and =NR²₂⁽⁺⁾; and
wherein each R² is independently selected from: -C₁ to C₂₀ alkyl.

8. The epoxy resin curative of any one of the preceding claims wherein each R³ group is independently selected from: -H, -C₁ to C₁₀ alkyl, a 6 to 10 membered aromatic group, and a 5 to 10 membered heteroaromatic group; preferably -H or furanyl; and/or
wherein each R⁴ and/or each R⁵ are independently selected from: -H, -C₁ to C₂₀ alkyl, -C₁ to C₂₀ haloalkyl, -C₃ to C₂₀ cycloalkyl, -C₂ to C₂₀ alkenyl, -C₂ to C₂₀ alkynyl, -C₁ to C₂₀ alkyloxy, -C₁ to C₂₀ alkylamino, -C₆ to C₂₀ aryl, and C₂ to C₂₀ heteroaryl; preferably: -H, -C₁ to C₂₀ alkyl, -C₃ to C₂₀ cycloalkyl, -C₂ to C₂₀ alkenyl, and -C₁ to C₂₀ alkylamino.

9. A process of preparing an epoxy resin curative of formula (1) as defined in any one of claims 1 to 8, the method comprising performing a Mannich reaction using:
i) a precursor of formula (2); 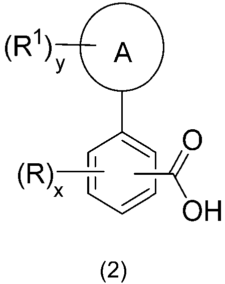
ii) one or more aldehyde having the structure HR³C=O; and
iii) one or more amine having the structure HNR⁴R⁵;
wherein R, R¹, R², R³, R⁴, R⁵, A, x and y are as defined in any one of claims 1 to 8.

10. The process of Claim 9, wherein the Mannich reaction further comprises:
iv) an optionally substituted 6 to 10 membered aromatic compound or an optionally substituted 5 to 10 membered heteroaromatic compound, preferably a phenolic compound, more preferably phenol.

11. The process of Claim 9 or Claim 10, wherein the precursor of formula (2), the one or more amine having the structure HNR⁴R⁵, and optionally a substituted phenolic compound, are mixed prior to addition of the one or more aldehyde having the structure HR³C=O; and/or wherein the aldehyde is formaldehyde, and is optionally introduced to the reaction in the form of a paraformaldehyde.

12. An epoxy resin curative composition comprising an epoxy resin curative as defined in any one of Claims 1 to 8.

13. A method for preparing a cured epoxy resin, said method comprising:
a) contacting an epoxy resin with an epoxy resin curative as defined in any one of Claims 1 to 8 or a composition according to Claim 12; and
b) forming a cured epoxy resin, preferably wherein the epoxy resin is selected from glycidyl amines, epoxidized novolacs and bisphenols (A or F) or halogenated analogues thereof.

14. A cured epoxy resin prepared, or preparable, by the method of Claim 13.

15. Use of an epoxy resin curative as defined in any one of Claims 1 to 8 or of a composition according to Claim 12, for causing crosslinking in an epoxy resin.
